(19) Europäisches Patentamt / European Patent Office / Office européen des brevets

(11) **EP 3 671 513 B1**

(12) **EUROPÄISCHE PATENTSCHRIFT**

(45) Veröffentlichungstag und Bekanntmachung des Hinweises auf die Patenterteilung:
**11.05.2022   Patentblatt 2022/19**

(21) Anmeldenummer: **19020681.3**

(22) Anmeldetag: **09.12.2019**

(51) Internationale Patentklassifikation (IPC):
**G06F 21/60** (2013.01)      **G06Q 20/14** (2012.01)
**G06Q 20/06** (2012.01)

(52) Gemeinsame Patentklassifikation (CPC):
**G06F 21/602; G06Q 20/065; G06Q 20/145;**
G06Q 2220/00; H04L 2209/38; H04L 2209/56

(54) **VERFAHREN ZUM DIREKTEN AUSTAUSCH EINES MÜNZDATENSATZES ZWISCHEN SICHERHEITSELEMENTEN**

METHOD FOR DIRECT EXCHANGE OF A COIN DATA SET BETWEEN SECURITY ELEMENTS

PROCÉDÉ D'ÉCHANGE DIRECT D'UN ENSEMBLE DE DONNÉES DE PIÈCE DE MONNAIE ENTRE DES ÉLÉMENTS DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018   DE 102018009945**

(43) Veröffentlichungstag der Anmeldung:
**24.06.2020   Patentblatt 2020/26**

(73) Patentinhaber: **Giesecke+Devrient advance52 GmbH**
**81541 München (DE)**

(72) Erfinder:
• **Fritzhanns, Dr.Tilo**
**80639 München (DE)**
• **Gawlas, Dr.Florian**
**80805 München (DE)**

(74) Vertreter: **Ter Meer Steinmeister & Partner Patentanwälte mbB**
**Nymphenburger Straße 4**
**80335 München (DE)**

(56) Entgegenhaltungen:
**WO-A1-2018/126077      US-A1- 2017 132 621**
**US-A1- 2018 288 095**

• **CARLTON SHEPHERD ET AL: "Establishing Mutually Trusted Channels for Remote Sensing Devices with Trusted Execution Environments", AVAILABILITY, RELIABILITY AND SECURITY, ACM, 2 PENN PLAZA, SUITE 701NEW YORKNY10121-0701USA, 29. August 2017 (2017-08-29), Seiten 1-10, XP058370940, DOI: 10.1145/3098954.3098971 ISBN: 978-1-4503-5257-4**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

TECHNISCHES GEBIET DER ERFINDUNG

Die Erfindung betrifft ein Verfahren zum direkten Austauschen eines elektronischen Münzdatensatzes zwischen Sicherheitselementen. Dazu betrifft die Erfindung ein Bezahlsystem zwischen zumindest zwei Endgeräten, wobei jedes der Endgeräte ein Sicherheitselement aufweist.

TECHNISCHER HINTERGRUND DER ERFINDUNG

Seit einiger Zeit vermieten Hersteller ihre Endgeräte, wie beispielsweise Maschinen, Automaten, Werkzeugen, anstelle sie einem Produkthersteller zu verkaufen. Anstelle einer hohen Einmalzahlung und Wartungskosten wird ein vereinbartes Honorar für jede Produktionseinheit vereinbart. Sensoren und Mikrocontroller sammeln die entsprechenden Informationen und berechnen die anfallenden Gebühren pro hergestellte Einheit oder Sub-Einheit oder auch pro genutzten Dienst.

Ein derartiges "Pay-per-Use" Maschinensteuern verringert Unsicherheiten bei der Neuanschaffung einer Maschine und verhindert so die Benutzung von veralteten Maschinen.

Beispielsweise könnte ein Roboterarm pro Bewegung bezahlt werden. Dabei könnte die Bewegung registriert werden und diese dann abgerechnet werden. Oder eine bei einem den Roboterarm steuernden Endgerät (=Maschine) eingegangene Bezahlung könnte Voraussetzung für eine Bewegung des Roboterarms sein, also zum maschinellen Antreiben des Roboterarms verwendet werden. Eine Steuereinheit in der Maschine überwacht den Erhalt eines Geldbetrages und steuert eine Bewegung in Abhängigkeit des eingegangenen Geldbetrages.

Problematisch bei dieser Art des Maschinensteuerns ist die Erhebung der zahlungsrelevanten Daten und der komplexe Abrechnungsprozess. Hinzu kommen überregionale, beispielsweise weltweit verstreute, Produktionslinien, die Währungswechsel und Rechtssystemwechsel, beispielsweise in Bezug auf Zahlungsmoral und Zahlungsausfall, bedingen.

Ein Ansatz für das "Pay-per-Use" könnte das Bezahlen mit geldwerten Beträgen in Form elektronischer Datensätze sein, wie es beispielsweise aus der DE 10 2005 008 610 A1 bekannt ist. Hierbei werden geldwerte Beträge in Form von elektronischen Datensätzen vorrangig in Rechnernetzen als Bezahlmedium verwendet. Um ein hohes Maß an Anonymität zu sichern, wird seitens eines Geldinstituts eine Software zur Erzeugung einer Banksignatur und asymmetrischer Schlüsselpaare bereitgestellt, mit dessen Hilfe ein Kunde sicher und anonym im besagten Rechnernetzen einkaufen kann.

Ein Bezahlen im "Pay-per-Use" Ansatz könnte beispielsweise über sogenannte dezentral gesteuerte Transaktionsdatenbanken, englisch Distributed Ledger Technology, DLT, durchgeführt werden, bei denen geldwerte Beträge im Block-Chain-Verfahren ausgetauscht werden. Diese dezentrale Lösung bedingt ein recht aufwendiges Verschlüsseln und Übertragen der geldwerten Beträge, was für den Einsatz zwischen Endgeräten, wie Maschinen, aufgrund der Langsamkeit und auch der Komplexität bei einer großen Anzahl von Endgeräten ungeeignet ist.

Aus der DE 10 2009 038 645 A1 und der DE 10 2009 034 436 A1 sind Systeme zum Übertragen von geldwerten Beträgen in Form elektronischer Datensätze, bei denen ein Bezahlen mit Duplikaten des Datensatzes verhindert und ein hoher Grad an Manipulationssicherheit gegeben ist, wobei hier komplexe Strukturen und aufwendige Verschlüsselungs- und Signiervorgänge beim Austausch erforderlich sind.

In der WO 2018/126077 A1 werden Internet der Dinge (IoT)-Geräte beschrieben, die Ferndetektier- und Fernaktivierungsfunktionen ausführen können. Dabei wird auch ein Smart-Contract Verfahren gezeigt, das in einem IoT Gerät implementiert werden kann. Dazu generiert das IoT-Gerät neue Schlüssel und fragt einen Token an, der im Ansatz "Pay-per-Use" verbrauchbar ist, indem er zwischen den Geräte übertragen wird.

In der US 2018/0288095 A1 wird ein Gerät mit Prozessor mit vertrauenswürdiger Ausführungsumgebung beschrieben. Ein dabei verwendeter vertrauenswürdiger Speicher hat ein gemeinsames Repository. Das Gerät enthält einen Speicher, in dem Anweisungen gespeichert sind, die den Prozessor zur Ausführung von Operationen veranlassen. Zu den Operationen gehören der Empfang von Daten einer ersten vertrauenswürdigen Anwendung der vertrauenswürdigen Anwendungen und die Speicherung der Daten der ersten Anwendung im gemeinsamen Speicher. Die Operationen umfassen die Bestimmung, dass eine zweite vertrauenswürdige Anwendung der vertrauenswürdigen Anwendungen die Erlaubnis hat, auf die Daten der ersten Anwendung zuzugreifen, und die Erlaubnis für die zweite vertrauenswürdige Anwendung, auf die Daten der ersten Anwendung zuzugreifen.

Die Publikation Carlton Shepherds et. al. "Establishing Mutually Trusted Channels for Remote Sensing Devices with Trusted Execution Environment" betrifft die lokale Bearbeitung von Daten mittels TEE.

In der US 2017/0132621 A1 wird ein System und Verfahren zum Verifizieren einer kryptographischen Transaktion beschrieben, dass das Anfordern eines Teils der Blockkette umfasst, die einen Merkle-Baumpfad umfasst. Das Verfahren weist das Verifizieren eines Wertes des Kryptowährungsschlüssels unter Verwendung einer vereinfachten Zahlungsüberprüfung und das Bündeln der kryptographischen Transaktion, eines Block-Headers der kryptographischen Transaktion, einer Vielzahl von Block-Headern, die auf den Block-Header der kryptographischen Transaktion folgen, und des Merkle-Baumpfades auf, wodurch eine kryptographische Währungsquittung gebildet wird.

Es ist somit Aufgabe der vorliegenden Erfindung, ein Verfahren und ein System zu schaffen, in denen eine "Pay-per-Use" Maschinensteuerungen einfach ausgestaltet ist. Dabei soll insbesondere eine direkte Bezahlung zwischen Endgeräten, wie Maschinen oder Produktionseinheiten geschaffen werden, die unkompliziert und schnell ist. Das dazu notwendige Übertragen von geldwerten Beträgen in elektronischer Form zwischen den Endgeräten soll fälschungssicher und vertrauenswürdig erfolgen. Die Datensätze sollen geringe Datenmengen aufweisen, um ein schnelles Austauschen zu gewährleisten. Mehrere Datensätze sollen beliebig miteinander kombiniert werden können, um ein flexibles Austauschen zu ermöglichen.

## ZUSAMMENFASSUNG DER ERFINDUNG

Die gestellte Aufgabe wird mit den Merkmalen der unabhängigen Patentansprüche gelöst. Weitere vorteilhafte Ausgestaltungen sind in den abhängigen Patentansprüchen beschrieben.

Die Aufgabe wird insbesondere durch ein Verfahren zum direkten Austauschen eines elektronischen (digitalen) Münzdatensatzes zwischen Sicherheitselementen von Endgeräten mit folgenden Schritten gelöst: Empfangen eines Münzdatensatzes in einem ersten Sicherheitselement, wobei der Münzdatensatz durch eine Zufallszahl repräsentiert ist und der Münzdatensatz eine Anzahl von Elementen repräsentiert und wobei jedes Element des empfangenen Münzdatensatzes als das Ergebnis einer kryptografischen Funktion aus der Zufallszahl und der Position des Elements im Münzdatensatz abbildbar ist; Übertragen eines vom empfangenen Münzdatensatz abgeleiteten Münzdatensatz vom ersten Sicherheitselement an ein zweites Sicherheitselement, wobei der abgeleitete Münzdatensatz zumindest ein Element des empfangenen Münzdatensatzes und die Position des Elementes im empfangenen Münzdatensatz aufweist; und Anzeigen des Besitzes des abgeleiteten Münzdatensatzes vom zweiten Sicherheitselement an einer Verifizier-Einheit.

Ein elektronischer Münzdatensatz ist insbesondere ein elektronischer Datensatz, der einen geldwerten Betrag repräsentiert und umgangssprachlich auch als "digitale Münze" oder "elektronische Münze" bezeichnet wird. Dieser geldwerte Betrag wechselt bei dem Verfahren von einem ersten Sicherheitselement zu einem anderen Sicherheitselement. Als ein geldwerter Betrag wird im Folgenden ein digitaler Betrag verstanden, der auf einem Konto gutgeschrieben werden kann. Der Münzdatensatz repräsentiert beispielsweise Bargeld in elektronischer Form, das auf einem Geldkonto gutgeschrieben wird.

Die elektronischen Datensätze zum Übertragen von geldwerten Beträgen unterscheiden sich wesentlich von elektronischen Datensätzen zum Datenaustausch oder Datentransfer, da beispielsweise eine klassische Datentransaktion auf Basis eines Frage-Antwort-Prinzips bzw. auf einer Interkommunikation zwischen den Datentransferpartnern stattfindet. Geldwerte Beträge in Form elektronischer Datensätze kennzeichnen sich dementgegen durch Einmaligkeit, Eindeutigkeit und Sicherheitsmerkmale (Signaturen, Verschlüsselungen) aus. In einem digitalen Münzdatensatz sind prinzipiell alle Daten enthalten, die für eine empfangende Instanz bezüglich Verifikation, Authentisierung und Weitergeben an andere Instanzen benötigt werden. Eine Interkommunikation ist daher bei dieser Art Datensätze grundsätzlich nicht erforderlich.

Ein Sicherheitselement ist bevorzugt eine spezielle Software, insbesondere in Form einer abgesicherten Laufzeitumgebung innerhalb eines Betriebssystems eines Endgeräts, englisch Trusted Execution Environments, TEE. Alternativ ist das Sicherheitselement beispielsweise als spezielle Hardware, insbesondere in Form eines gesicherten Hardware-Plattform-Moduls, englisch Trusted Platform Module, TPM oder als ein eingebettetes Sicherheitsmodul, eUICC, eSIM, ausgebildet. Das Sicherheitselement stellt eine vertrauenswürdige Umgebung bereit und sichert beispielsweise eine Machine-2-Machine, M2M, Anwendung ab.

Die Kommunikation zwischen zwei Sicherheitselementen kann drahtlos oder drahtgebunden erfolgen und kann als ein gesicherter Kanal ausgebildet sein. Somit ist der Austausch des Münzdatensatzes durch kryptografische Schlüssel gesichert, beispielsweise einem für einen Münzdatensatz-Austausch ausgehandelten Sitzungsschlüssel oder einem symmetrischen oder asymmetrischen Schlüsselpaar.

Durch das Kommunizieren zwischen Sicherheitselementen werden die ausgetauschten Münzdatensätze vor Diebstahl oder Manipulation geschützt. Die Ebene der Sicherheitselemente ersetzt so, die fehlende Sicherheit, etablierter Blockchain-Technologie. Durch Kenntnisse der Zufallszahl in der Verifizier-Einheit wird zudem ein sehr transparentes System geschaffen, welches Manipulationen oder Angriffsversuche schnell identifiziert und unterbindet.

Als ein Endgerät wird ein, für M2M-Anwendungen vorgesehenes, Gerät, wie Maschine, Werkzeug, Automat oder auch Behälter und Fahrzeug angesehen. Ein erfindungsgemäßes Endgerät ist somit entweder stationär oder mobil. M2M steht dabei für den (voll-) automatisierten Informationsaustausch zwischen diesen Endgeräten, beispielsweise unter Nutzung des Internets und den entsprechenden Zugangsnetzen, wie dem Mobilfunknetz.

Der im ersten Sicherheitselement empfangene Münzdatensatz wird durch eine Zufallszahl repräsentiert. Das erste Sicherheitselement erhält daher eine Zufallszahl. Der Münzdatensatzrepräsentiert erfindungsgemäß eine Anzahl von Elementen. Bei der Generation dieses Münzdatensatzes wird ein geldwerter Betrag festgelegt, der dann gemäß der Anzahl der Elemente als Münzdatensatz repräsentiert wird. Diese Elemente haben bevorzugt die gleiche Gewichtung. Erfindungsgemäß kann nun von dem empfangenen Münzdatensatz abgeleiteter Münzdatensatz an ein zweites Sicherheitselement übertragen werden. Dazu weist der abgeleitete Münzdatensatz zumindest ein Element des empfangenen Münzdatensatzes und die Position des Elementes im empfangenen Münzdatensatz auf. Dieses zumindest eine Element ist das Ergebnis einer kryptografischen Funktion aus der den empfangenen Münzdatensatz repräsentierenden Zufallszahl und der Position des Elements im empfangenen Münzdatensatz dar. Diese kryptografische Funktion ist beispielsweise eine kryptographische Streuwertfunktion, englisch: Hash-Funktion. Alternativ ist die kryptografische Funktion eine Funktion elliptischer Kurven oder dergleichen.

Diese kryptografische Funktion bedingt, dass jedes Element im Verfahren eindeutig ist und kein zweites identisches Element koexistieren kann. Jedes Element wurde dafür aus der Zufallszahl und der Position im Münzdatensatz gebildet. Die Zufallszahl ist dabei für alle Elemente dieses Münzdatensatzes gleich. Die Elemente des Münzdatensatzes werden somit durch ihre Position im Datensatz individualisiert.

Diese Elemente des Münzdatensatzes können aufgrund ihrer Struktur und ihres Ursprungs nicht von Sicherheitselementen nachgebildet werden und sind im Verfahren eindeutig.

Dieses Verfahren ermöglicht nun ein einfaches Ableiten von Münzdatensätzen und einen einfachen Austausch von abgeleiteten Münzdatensätzen, repräsentiert durch zumindest ein Element des empfangenen Münzdatensatzes. Dazu wird zumindest ein Element vom ersten Sicherheitselement aus der Zufallszahl und der Position des Elements im empfangenen Münzdatensatz unter Verwendung der kryptografischen Funktion errechnet. Das zweite Sicherheitselement erhält als abgeleiteten Münzdatensatz zumindest das errechnete Element des ursprünglichen (empfangenen) Datensatzes, dessen Zufallszahl (auch als "Basis" oder "Root" bezeichnet) es nicht kennt und eine Position des Elements in diesem ursprünglichen Datensatz. Durch die dem zweiten Sicherheitselement unbekannten Zufallszahl, ist die Fälschungssicherheit der Elemente und somit die Sicherheit des Verfahrens gewährleistet.

Der Münzdatensatz ist also vergleichbar mit einer digitalen Streifenkarte, deren einzelne Elemente - die der Münzdatensatz repräsentiert - per se unbedingt zwischen Sicherheitselementen ausgetauscht werden können. In vorteilhafter Weise müssen nun aber nicht alle Elemente einzeln übertragen werden, sondern nur eine den Münzdatensatz repräsentierende Zufallszahl. Der rechtmäßige Besitz der Zufallszahl legitimiert zum Errechnen aller einzelnen Elemente des empfangenen Münzdatensatzes aus der Zufallszahl und der Position des Elements in dem Münzdatensatz. Damit ist ein entsprechendes Ableiten von Münzdatensätzen vereinfacht möglich. Der Besitz eines Elements oder einer Sequenz dieses empfangenen Münzdatensatzes - beispielsweise nach Erhalt in dem zweiten Sicherheitselement - wird in einer Verifizier-Einheit angezeigt. Die Verifizier-Einheit kennt die Zufallszahl und verifiziert anhand der Position des Elements im ursprünglichen Münzdatensatz die Echtheit des Elements oder der Sequenz. Die Verifizier-Einheit kann das Anzeigen protokollieren, sodass ein Element nicht mehrfach ausgegeben kann. Das Einlösen des Elements durch das jeweilige Sicherheitselement ist erst möglich, nachdem der Besitz des Elements in der Verifizier-Einheit angezeigt wurde.

In einer bevorzugten Ausgestaltung werden zwei Elemente des empfangenen Münzdatensatzes an das zweite Sicherheitselement übertragen, wobei die zwei Elemente eine Sequenz von Elementen des empfangenen Münzdatensatzes repräsentieren. Die Anzahl der Elemente der Sequenz des Münzdatensatzes ist kleiner als die maximale Anzahl der Elemente des Münzdatensatz. Die zwei Elemente werden vom ersten Sicherheitselement aus der Zufallszahl und der Position des Elements im empfangenen Münzdatensatz unter Verwendung der kryptografischen Funktion errechnet.

Dies ermöglicht ein einfaches Aufteilen des Münzdatensatzes auf mehrere Sicherheitselemente innerhalb kürzester Zeit oder mehrere Zahlungen an verschiedene Sicherheitselemente in zeitlichen Etappen. Die zwei Elemente repräsentieren eine Sequenz von Elementen, die von einem Sicherheitselement an ein anderes Sicherheitselement übertragen wird. Zwischen den Elementen können weitere Elemente im empfangenen Münzdatensatz angeordnet sein. Diese weiteren Elemente werden nicht als abgeleiteter Münzdatensatz übertragen. Dennoch repräsentiert der abgeleitete Münzdatensatz auch alle zwischen den zwei Elementen angeordneten Elemente. Somit werden zwar die geldwerten Beträge aller Elemente übertragen, allerdings werden im abgeleiteten Münzdatensatz nur zwei Elemente untergebracht, die die Gesamtheit der zu übertragenden Elemente repräsentiert. Damit kann ein hochindividueller Austausch von Münzdatensätzen zwischen Sicherheitselementen erfolgen, ohne dass alle einzelnen Elemente tatsächlich zwischen den Sicherheitselementen ausgetauscht werden müssen. Die Größe des abgeleiteten Münzdatensatz kann damit enorm reduziert werden.

In einer bevorzugten Ausgestaltung besteht der abgeleitete Münzdatensatz nur aus einem Anfangselement einer zu übertragenden Sequenz, einem Endelement der zu übertragenden Sequenz und deren jeweilige Positionen im empfangenen (ursprünglichen) Münzdatensatz. In einer alternativen Ausgestaltung umfasst der abgeleitete Münzdatensatz ein Anfangselement der Sequenz und dessen Position in dem empfangenen Münzdatensatz sowie die Anzahl der Elemente der Sequenz.

Anfangs- und Endelement bilden in einfacher Weise die Grenzen der Sequenz. Dementgegen können alternativ auch andere Elemente des empfangenen Münzdatensatzes verwendet werden, solange sichergestellt ist, dass die Sequenz an Elementen damit eindeutig repräsentiert (und auch erkannt) wird.

Anstelle nun jedes Element der Sequenz in dem abgeleiteten Münzdatensatz einzeln anzugeben, wird nun vorteilhaft lediglich das Anfangselement und deren Position und das Endelement bzw. die Anzahl der Elemente übertragen, wodurch der abgeleitete Münzdatensatz - speziell bei Sequenzen aus vielen Elementen - wesentlich kleiner ist. Dies verkürzt die Übertragungszeit, entspannt das Übertragungs-Netzwerk und beschleunigt so den Datensatz-Austausch. Da die Sicherheitselemente zumeist beschränkte Rechenressourcen (Mikrokontroller, Speicherbereiche) aufweisen, wird durch das Minimieren der Datensätze eine enorme Beschleunigung des Verfahrens ermöglicht.

In einer bevorzugten Ausgestaltung umfasst das Verfahren nach dem Anzeigen bei der Verifizier-Einheit zudem die Schritte: Berechnen einer kryptografischen Funktion für zumindest ein Element der Sequenz unter Verwendung eines abgeleiteten Wertes aus der Sequenz und der Position des Elements in der Sequenz; Hinzufügen des Ergebnisses der kryptografischen Funktion und der Position des Elementes im empfangenen Münzdatensatz zum abgeleiteten Münzdatensatz, um einen weiteren abgeleiteten Münzdatensatz zu erhalten; und Übertragen des vom abgeleiteten Münzdatensatz weiter abgeleiteten Münzdatensatz vom zweiten Sicherheitselement an das erste Sicherheitselement oder an ein drittes Sicherheitselement. Der weiter abgeleitete Münzdatensatz umfasst zumindest ein Element des abgeleiteten Münzdatensatzes und die Position des Elementes im abgeleiteten Münzdatensatz.

In einer bevorzugten Ausgestaltung werden zwei Elemente des abgeleiteten Münzdatensatzes an das erste oder dritte Sicherheitselement übertragen, wobei die zwei Elemente eine Sequenz von Elementen des abgeleiteten Münzdatensatzes repräsentieren. Die Anzahl der Elemente der Sequenz des weiter abgeleiteten Münzdatensatzes ist kleiner als oder gleich der maximalen Anzahl der Elemente des abgeleiteten Münzdatensatzes. Die zwei Elemente werden vom zweiten Sicherheitselement aus dem abgeleiteten Wert und der Position des Elements im abgeleiteten Münzdatensatz unter Verwendung der kryptografischen Funktion errechnet.

Damit wird in vorteilhafter Weise ermöglicht, dass eine im zweiten Sicherheitselement erhaltene Sequenz weiter aufgeteilt werden kann und diese Aufteilungen an ein weiteres oder mehrere unterschiedliche Sicherheitselemente gesendet werden kann. Das zweite Sicherheitselement ist damit nicht darauf beschränkt, den abgeleiteten Münzdatensatz (die Sequenz) in seiner Gänze oder ausschließlich als einzelne Münz-Elemente weiter zu übertragen.

Der abgeleitete Wert ist bevorzugt eine logische Verknüpfung des Anfangselements der Sequenz mit dem Endelement der Sequenz. Eine logische Verknüpfung ist eine einfache Rechneroperation in Boolescher Algebra, beispielsweise Konjunktion, Disjunktion, Implikation und Äquivalenz. Für dieses Verfahren vorrangig wird eine Konjunktion (AND) oder eine Äquivalenz (XOR) als logische Verknüpfung verwendet, um den Wert abzuleiten. Alternativ oder zusätzlich ist der abgeleitete Wert eine Streuwertfunktion, beispielsweise aus dem Anfangselement und dem Endelement der Sequenz. Diese einfachen Operationen ermöglichen ein schnelles eindeutiges Ableiten des Wertes und sind mit einfachen Mikrokontrollern schnell umsetzbar. Ein zügiges weiteres Aufteilen unter Beibehaltung einer verifizierbaren Eindeutigkeit des abgeleiteten Münzdatensatzes ist damit gewährleistet.

Die kryptografische Funktion ist bevorzugt eine Streuwertfunktion (=Hashfunktion). Eine Streuwertfunktion (auch Hashfunktion) ist eine Abbildung einer großen Eingabemenge auf eine kleinere Zielmenge. Das Ergebnis der Hashfunktion ist ein Hashwert. Eine Hashfunktion ist nicht injektiv. Die Hashwerte haben auch bei unterschiedlichen Eingangsparametern eine feste Länge, sodass die Datenmenge prädiktiv ist. Mit einer Streuwertfunktion ist Eindeutigkeit des Verfahrens trotz Reduzierung der Datenmengen ermöglicht, wodurch das Übertragen und Verifizieren beschleunigt ist.

Die kryptografische Funktion ist bevorzugt eine Funktion elliptischer Kurven, womit ebenfalls Eindeutigkeit und ein schnelles Übertragen und Verifizieren ermöglicht ist.

Die Verifizier-Einheit ist in Kenntnis von der Zufallszahl. Durch das Anzeigen des abgeleiteten Münzdatensatzes des zweiten Sicherheitselements kann die Eindeutigkeit und Echtheit des empfangenen Münzdatensatzes oder des abgeleiteten Münzdatensatz jederzeit von der Verifizier-Einheit verifiziert werden.

Jedes Sicherheitselement ist bevorzugt genau einem Endgerät eindeutig zugeordnet. Dieses Sicherheitselement kann bevorzugt auch zumindest einer Komponente des Endgeräts zugeordnet sein. So können Komponenten eines Endgeräts von einem Sicherheitselement abgesichert werden, was einerseits die Anzahl der Sicherheitselemente im System vorteilhaft reduziert und andererseits Komponenten mit geringerer Rechenleistung oder fehlender Sicherheitsarchitektur die Teilnahme am erfindungsgemäßen Verfahren ermöglicht.

Bevorzugt erfolgt vor dem Erhalten des Münzdatensatzes ein Anfragen des Münzdatensatz bei einer Transaktionsdatenbank. Auf Basis des angefragten geldwerten Betrages wird dann der Münzdatensatz von der Transaktionsdatenbank oder einem angegliederten Münzausgebers generiert und dem ersten Sicherheitselement zur Verfügung gestellt. Das Generieren umfasst insbesondere das Erzeugen einer Zufallszahl und das Anwenden einer kryptografischen Funktion zum Erzeugen jedes einzelnen Elements des Münzdatensatzes durch Verwendung der Zufallszahl und einer Position des Elements in dem Münzdatensatz. Der Münzdatensatz wird sodann dem ersten Sicherheitselement kryptografisch gesichert zur Verfügung gestellt, beispielsweise durch den Münzherausgeber. Die Zufallszahl wird der Verifizier-Einheit zur Verfügung gestellt. Ab Erhalt wird der empfangene Münzdatensatz dann der Verifizier-Einheit angezeigt, um im Verfahren verwendet zu werden. Alternativ wird der Münzdatensatz von der Verifizier-Einheit generiert oder von dieser ausgegeben, wodurch ein Anzeigen nach dem Empfangen des Münzdatensatzes entfallen kann.

Der empfangene oder abgeleitete Münzdatensatz kann zum Gutschreiben des damit verbundenen geldwerten Betrags bei einer dezentral geführten Transaktionsdatenbank eingelöst werden.

Das zweite Sicherheitselement erhält in einer vorteilhaften Ausgestaltung zumindest zwei abgeleitete Münzdatensätze, wobei das zweite Sicherheitselement beide Münzdatensätze zu einem gemeinsamen Münzdatensatz verbindet. Dabei können die durch das Ableiten hinzugefügten Ergebnisse der kryptografischen Funktion und der Position der jeweiligen (Zwischen-) Elemente gelöscht werden, um den gemeinsamen Münzdatensatz zu erhalten. Somit müssen von unterschiedlichen Sicherheitselementen erhaltene Münzdatensätze nicht getrennt übertragen werden und es können mehrere Münzdatensätze zusammengefasst werden, um einen größeren geldwerten Betrag zu repräsentieren als durch beide einzelnen Münzdatensätze repräsentiert wäre.

Der empfangene Münzdatensatz hat eine eindeutige Kennung, die auch in den abgeleiteten Münzdatensätzen enthalten ist. Somit ist der Münzdatensatz eindeutig referenziert und in der Verifizier-Einheit schneller zugeordnet.

Bevorzugt sind alle Elemente des Münzdatensatzes gleichwertig, das heißt der Münzwert eines Elements des Münzdatensatz ist für alle Elemente gleich.

In einem weiteren Aspekt wird die Aufgabe durch ein weiteres Verfahren zum direkten Austauschen von elektronischen Münzdatensätzen zwischen Sicherheitselementen von Endgeräten gelöst. Dabei gelten alle bereits getroffenen Aussagen auch für dieses Verfahren fort und bevorzugte Ausgestaltungen des einen Verfahrens können mit dem weiteren Verfahren kombiniert werden.

Diese Verfahren umfassen den oben bereits beschriebenen Schritt des Empfangens eines Münzdatensatzes. Darauf folgt ein Übertragen eines ersten vom empfangenen Münzdatensatz abgeleiteten Münzdatensatzes vom ersten Sicherheitselement an ein zweites Sicherheitselement, wobei der abgeleitete Münzdatensatz zumindest ein Element des empfangenen Münzdatensatzes und die Position des Elementes im empfangenen Münzdatensatz aufweist. Zusätzlich folgt ein Übertragen eines zweiten vom empfangenen Münzdatensatz abgeleiteten Münzdatensatzes an das zweite Sicherheitselement, wobei der zweite abgeleitete Münzdatensatz zumindest ein dem Element des ersten abgeleiteten Münzdatensatzes direkt folgendes weiteres Element des empfangenen Münzdatensatzes und die Position des weiteren Elementes im empfangenen Münzdatensatz aufweist. Beide abgeleitete Münzdatensätze stammen demnach vom empfangenen Münzdatensatz ab. In diesem Fall müssen diese abgeleiteten Münzdatensätze nicht getrennt behandelt werden, sondern es folgt ein Kombinieren des ersten abgeleiteten Münzdatensatzes mit dem zweiten abgeleiteten Münzdatensatz zum Erhalten eines kombinierten abgeleiteten Münzdatensatzes und schließlich ein Anzeigen des Besitzes des kombinierten abgeleiteten Münzdatensatzes vom zweiten Sicherheitselement an einer Verifizier-Einheit. Durch das Kombinieren der abgeleiteten Münzdatensätze werden die zur Übertragung, Gutschreibung und/oder Verifizierung zu übertragenden Datenmengen deutlich reduziert und so, ein schnellerer Austausch elektronischer Münzdatensätze zwischen Endgeräten ermöglicht.

Bevorzugt werden der erste abgeleitete Münzdatensatz und/oder der zweite abgeleitete Münzdatensatz (auch) an der Verifizier-Einheit angezeigt. Die Verifizier-Einheit in ihrer oben Beschriebenen Funktion kann somit auch ein Aufeinanderfolgen der Elemente in den unterschiedlichen abgeleiteten Münzdatensätzen erkennen und protokollieren. Dies erhöht die Sicherheit im Verfahren.

In einer bevorzugten Ausgestaltung werden mit dem ersten abgeleiteten Münzdatensatz und/oder mit dem zweiten abgeleiteten Münzdatensatz jeweils zwei Elemente des empfangenen Münzdatensatzes an das zweite Sicherheitselement übertragen, wobei die zwei Elemente eine Sequenz von Elementen des empfangenen Münzdatensatzes repräsentieren. Der Vorteil der Übertragung von Elementen, die eine Sequenz repräsentieren anstelle des Übertragens aller Elemente einer Sequenz ist oben bereits beschrieben. Werden durch die beiden empfangenen abgeleiteten Münzdatensätze zwei direkt aufeinanderfolgende Sequenzen repräsentiert, wird eine Kombinierbarkeit der Sequenzen im zweiten Sicherheitselement erkannt.

Bevorzugt weist der erste abgeleitete Münzdatensatz und/oder der zweite abgeleitete Münzdatensatz jeweils nur ein Anfangselement der Sequenz; ein Endelement der Sequenz; und deren jeweilige Positionen im empfangenen (ursprünglichen) Münzdatensatz auf. Somit müssen nicht alle Elemente einzeln übertragen werden, was die Datenmenge zu übertragender Münzdatensätze weiter deutlich reduziert. Anfangs- und Endelement bilden in einfacher Weise die Grenzen der Sequenz. Dementgegen können alternativ auch andere Elemente gesendet werden, solange sichergestellt ist, dass die Sequenz an Elementen damit eindeutig repräsentiert (und auch erkannt) wird.

In einer bevorzugten Ausgestaltung ist das Element des empfangenen Münzdatensatzes das Ergebnis einer kryptografischen Funktion aus der, dem empfangenden Sicherheitselementen unbekannten Zufallszahl und der Position des Elements im Münzdatensatz, wie oben beschrieben und ggf. unter zusätzlicher Verwendung eines münzdatensatzspezifischen Übertragungszählwertes. Dabei wird der münzdatensatzspezifische Übertragungszählwert in dem sendenden Sicherheitselement generiert und überwacht. Weiter bevorzugt ist das Element des empfangenen abgeleiteten Münzdatensatzes das Ergebnis einer zweiten kryptografischen Funktion aus der zuvor berechneten kryptografischen Funktion und einem münzdatensatzspezifischen Übertragungszählwert. Bevorzugt wird dabei das (Münzdatensatz-) elementspezifische Ergebnis der kryptografischen Funktion aus Zufallszahl und Position von einer Transaktionsdatenbank oder der Verifizier-Einheit bereitgestellt. Dieses Ergebnis wird dann mit dem Übertragungszählwert kombiniert, bevorzugt über die zweite kryptografische Funktion. So kann der Zählwert ableitungsspezifisch von dem Sicherheitselement generiert und manipulationssicher übertragen werden. Der Zählwert wird für jede Ableitung eines Münzdatensatzes vom empfangenen Münzdatensatz um einen Zählwert erhöht.

In einer bevorzugten Ausgestaltung wird vor dem Kombinieren-Schritt geprüft, ob der münzdatensatzspezifische Übertragungszählwert vom zweiten abgeleiteten Münzdatensatz vom münzdatensatzspezifische Übertragungszählwert des ersten abgeleiteten Münzdatensatz um mehr als einen Zählwert abweicht.

Somit können aufeinanderfolgend abgeleitete Münzdatensätze einfach an ihrem Zählwert erkannt und verifiziert werden. Bevorzugt wird das Kombinieren der Münzdatensätze im Sicherheitselement verhindert oder das Verifizieren und Gutschreiben kombinierter Münzdatensätze in der Verifizier-Einheit dann verhindert, wenn die Zählwerte nicht aufeinanderfolgen.

Ein kombinierter abgeleiteter Münzdatensatz kann nun wie ein abgeleiteter Münzdatensatz behandelt werden und beispielsweise wie oben bereits beschrieben an weitere Sicherheitselemente oder zur Gutschreibung an eine Transaktionsdatenbank gesendet werden. Dazu umfasst das Verfahren weiter das Berechnen einer kryptografischen Funktion für zumindest ein Element der Sequenz des ersten oder zweiten abgeleiteten Münzdatensatzes unter Verwendung eines abgeleiteten Wertes aus der Sequenz des ersten oder zweiten abgeleiteten Münzdatensatzes und der Position des Elements in der Sequenz und das Hinzufügen des Ergebnisses der kryptografischen Funktion und der Position des Elementes im empfangenen Münzdatensatz zum kombinierten abgeleiteten Münzdatensatz.

Der abgeleitete Wert ist dabei bevorzugt - wie oben bereits ausgeführt - eine logische Verknüpfung des Anfangselements der Sequenz des ersten abgeleiteten Münzdatensatzes mit dem Endelement der Sequenz des zweiten abgeleiteten Münzdatensatzes.

Der abgeleitete Wert ist dabei bevorzugt eine Streuwertfunktion aus Anfangselement der Sequenz des ersten abgeleiteten Münzdatensatzes und Endelement der Sequenz des zweiten abgeleiteten Münzdatensatzes und - ggf. auch - einem abgeleiteten münzdatensatzspezifischen Übertragungszählwert der Sequenz. Der Übertragungszählwert gilt nur in der jeweiligen Ableitungsebene. Wird von einem abgeleiteten Münzdatensatz ein weiterer Münzdatensatz abgeleitet, sozusagen eine weitere Aufteilung einer Sequenz durchgeführt, so beginnt in der abgeleiteten Ebene der Übertragungszählwert von Eins an zu zählen.

Bevorzugt werden für jeden abgeleiteten Münzdatensatz sowohl der Zählwert der aktuellen Ableitungsebene als auch die Zählwerte aller übergeordneten Ableitungsebenen verwendet, um ein hochflexibles Kombinieren von abgeleiteten Münzdatensätzen zu gewährleisten.

Der zweite abgeleitete Münzdatensatz wird dabei vom ersten Sicherheitselement oder einem dritten Sicherheitselement übertragen. Damit können die Zeitpunkte zum Erhalten der jeweiligen Münzdatensätze weit auseinanderliegen, was der prinzipiellen Kombinierbarkeit aber nicht entgegensteht.

In einem Aspekt der Erfindung ist ein Bezahlsystem zum Austausch von geldwerten Beträgen zwischen zumindest zwei Endgeräten vorgesehen. Jedes der Endgeräte weist ein Sicherheitselement auf. Das Bezahlsystem umfasst eine dezentral geführte Transaktionsdatenbank, beispielsweise DLT, zum Übertragen von geldwerten Beträgen zwischen den Endgeräten, eine Verifizier-Einheit zum Verifizieren von digitalen Münzdatensätzen; und eine Direkttransaktionsschicht, in welcher jedes der hier beschriebenen Verfahren durchführbar ist.

Die Distributed-Ledger-Technologie, DLT, beschreibt dabei eine Technik für vernetzte Computer, die zu einer Übereinkunft über die Reihenfolge von bestimmten Transaktionen kommen und darüber, dass diese Transaktionen Daten aktualisieren. Es entspricht einem dezentral geführten Kontobuch oder einer dezentral geführten Transaktionsdatenbank. Die von dem Distributed-Ledger verwalteten Daten können zum Beispiel der Kontostand einer Bitcoinadresse, der Zustand eines Smart Contracts oder die Herkunft eines Diamanten sein. DLTs unterscheiden sich durch die Art, wie die vernetzen Computer zu einer Vereinbarung kommen, sogenannte Konsensus-Protokolle, etwa durch "Proof of Work", "Proof of Stake" etc.

Auf diese Weise können verschiedene Sicherheitsmechanismen zum Austauschen von geldwerten Beträgen zwischen Endgeräten angewendet werden. Durch Verwenden der Direkttransaktionsschicht wird eine schnelle "pay-per-use" Anwendung möglich, bei der die Endgeräte ihre geldwerten Beträge in Form der hier beschriebenen Münzdatensätze direkt miteinander austauschen.

## KURZE ZUSAMMENFASSUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:

Fig.1 ein Ausführungsbeispiel eines Bezahlsystems gemäß der Erfindung;

Fig.2 ein Ausführungsbeispiel eines Verfahrensablaufs zum direkten Austausch von Münzdatensätzen zwischen drei Sicherheitselementen gemäß der Erfindung;

Fig.3 ein Ausführungsbeispiel eines Verfahrensablaufdiagramms eines erfindungsgemäßen Verfahrens;

Fig.4 ein Ausführungsbeispiel für einen erhaltenen Münzdatensatz und ein Ausführungsbeispiel für ein abgeleiteten Münzdatensatz gemäß der Erfindung;

Fig.5 Ausführungsbeispiele für abgeleitete Münzdatensätze gemäß der Erfindung;

Fig.6 ein weiteres Ausführungsbeispiel eines Verfahrensablaufs zum direkten Austausch von Münzdatensätzen zwischen drei Sicherheitselementen gemäß der Erfindung;

Fig.7 ein weiteres Ausführungsbeispiel eines Verfahrensablaufdiagramms eines erfindungsgemäßen Verfahrens;

Fig.8 ein erfindungsgemäßes Zusammenführen von digitalen Münzdatensätzen zur Verwendung im erfindungsgemäßen Verfahren; und

Fig.9 ein erfindungsgemäßes Zusammenführen von digitalen Münzdatensätzen zur Verwendung im erfindungsgemäßen Verfahren.

FIGURENBESCHREIBUNG

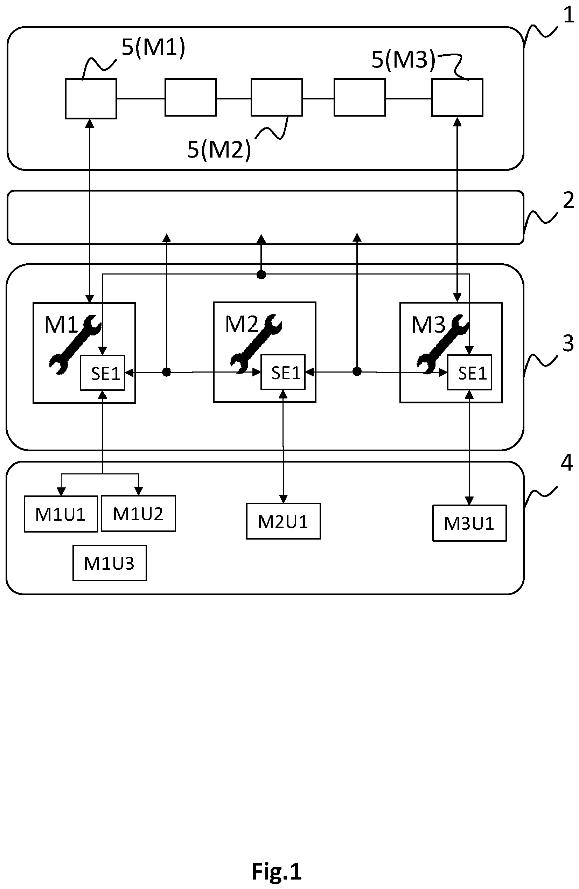

Fig.1 zeigt ein Ausführungsbeispiel eines Bezahlsystems mit Endgeräten M1, M2, M3 gemäß der Erfindung. Das erfindungsgemäße System basiert auf dem Ansatz, dass jedem, am System teilnehmenden Endgerät M1, M2, M3, ein Konto 5 zugewiesen ist, um elektronische Rechnungen begleichen zu können, also um geldwerte Beträge auszutauschen. Das Konto 5 kann ein Geldkonto, wie Bankkonto oder ein Blockchain-Wallet sein. Das hier gezeigte System zum Austausch eines digitalen Münzdatensatzes zwischen Endgeräten M1, M2, M3 besteht aus mehreren Schichten 1, 2, 3, 4, um unterschiedliche Anforderungen an die Sicherheit für die Transaktionen abbilden zu können.
Die sicherste Umgebung ist dabei in der Schicht 1 gegeben. Diese Schicht 1 repräsentiert eine dezentral geführte Transaktionsdatenbank 1, die auch als Distributed-Ledger-Technologie, kurz DLT, -Schicht bezeichnet wird. In dieser Transaktionsdatenbank 1 werden jedem Endgerät M1, M2, M3 Konten 5 zugeteilt. Die hier ausgetauschten geldwerten Beträge sind digitale Online-Münzdatensätze, englisch: Online-Coins. Diese Online-Münzdatensätze werden zwischen den einzelnen Konten 5(M1), 5(M2), 5(M3) der Endgeräte M1, M2, M3 als Blockketten, englisch: block-chain ausgetauscht, um Bezahlvorgänge mit geldwerten Beträgen durchzuführen (=Banktransaktionen).
Für die Autorisierung von derartigen Transaktionen von einem Endgeräte-Konto 5(M1), 5(M2), 5 (M3) aus, muss die Transaktion mit dem entsprechenden privaten kryptographischen Schlüssel (PrK) des Endgerätes M1, M2, M3 gesichert sein. Klassische DLT-Implementierungen, wie Bitcoin, Litecoin, Hyperledger, Ethereum sind in dieser Schicht 1 vorgesehen und stellen die dezentral geführten Kontobücher oder die dezentral geführte Transaktionsdatenbank 1 dar.
Ein Endgerät M1, M2, M3 kann neben dem Geldtransfer mittels der digitalen Online-Münzdatensätze in Schicht 1 auch digitale Online-Münzdatensätze als erfindungsgemäße Münzdatensätze abheben, um digitale elektronische Offline-Münzdatensätze zu erhalten. Diese digitalen Münzdatensätze sind zum erfindungsgemäßen direkten Austausch zwischen den Endgeräten M1, M2, M3 vorgesehen und benötigen dazu die Transaktionsdatenbank 1 und die Verifiziereinheit 2 nicht. Der Austausch erfolgt in der Direkttransaktionsschicht 3.
Wie in der Direkttransaktionsschicht 3 dargestellt ist, weist jedes Endgerät M1, M2, M3 ein ihm zugeordnetes Sicherheitselement SE1, SE2, SE3 auf. Diese Sicherheitselemente SE1, SE2, SE3 sind vertrauenswürdige Instanzen mit zertifizierter, abgesicherter und vorgegebener Funktionalität. Jegliche Transaktion zwischen Endgeräten M1, M2, M3 in dieser Direkttransaktionsschicht 3 zum Austausch digitaler Münzdatensätze bedingt ein Einbinden der Sicherheitselemente SE1, SE2, SE3.
Die Kommunikation zwischen den Sicherheitselementen SE1, SE2, SE3 ist bevorzugt kryptografisch gesichert, beispielsweise durch entsprechend verteilte kryptografische Schlüssel, einer PKI-Infrastruktur oder symmetrischer Schlüssel oder pro Austausch eines Münzdatensatzes ausgehandelten Sitzungsschlüssel. Die Sicherheitselemente SE1, SE2, SE3 stellen demnach die sichere Infrastruktur zur Verfügung, die durch das Nicht-Benutzen der Transaktionsdatenbank 1 sonst fehlen würde.
Die Endgeräte M1, M2, M3 besteht in der Regel aus mehreren Komponenten MxUx. Diese Komponenten MxUx haben mitunter eigene "Pay-per-Use" Funktionalität weisen aber kein eigenes Sicherheitselement SE auf. Damit diese Komponenten MxUx sicher im erfindungsgemäßen System agieren können, ist eine Komponenten-schicht 4 vorgesehen. Die Komponenten M1U1, M1U2, M1U3 eines ersten Endgeräts M1, beispielsweise drei Aktoren, wie Motor, Roboterarm und Laufband, sind logisch mit dem Sicherheitselement SE1 verbunden und führen darüber den Austausch der digitalen Münzdatensätze durch. Die Komponente M2U1 eines zweiten Endgeräts M2, beispielsweise ein Sensor, ist logisch mit dem zweiten Sicherheitselement SE2 verbunden und führt darüber den Austausch der digitalen Münzdatensätze durch. Die Komponente M3U1 eines dritten Endgeräts M3, beispielsweise ein Zählwerk, ist logisch mit dem dritten Sicherheitselement SE3 verbunden und führt darüber den Austausch der digitalen Münzdatensätze durch.

Die Komponente MxUx des Endgeräts Mx kann die Zahlungsanforderungen an das Sicherheitselement SEx des Endgeräts Mx übertragen. Über vordefinierte und implementierte Regeln entscheidet das Sicherheitselement SEx, wie auf die Zahlungsanforderung dieser Komponente MxUx zu reagieren ist, und übernimmt die Transaktion entsprechend.

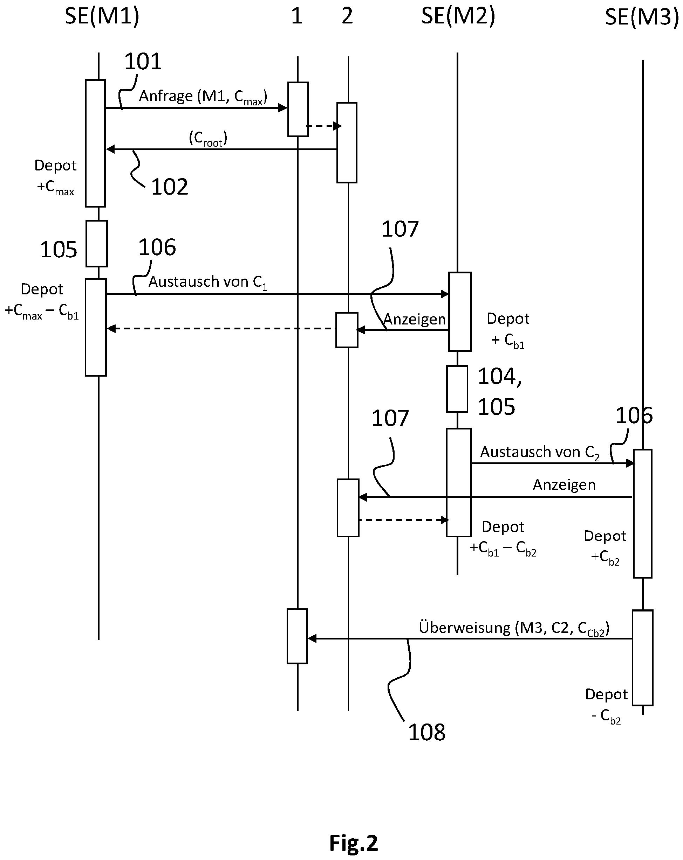

Die Fig.2 zeigt ein Ausführungsbeispiel eines Verfahrensablaufs eines Verfahrens 100 zum direkten Austausch von Münzdatensätzen zwischen einem ersten Sicherheitselement SE1 und einem zweiten Sicherheitselement SE2 gemäß der Erfindung und auch einen direkten Austausch von Münzdatensätzen zwischen dem zweiten Sicherheitselement SE2 und einem dritten Sicherheitselement SE3 gemäß der Erfindung.

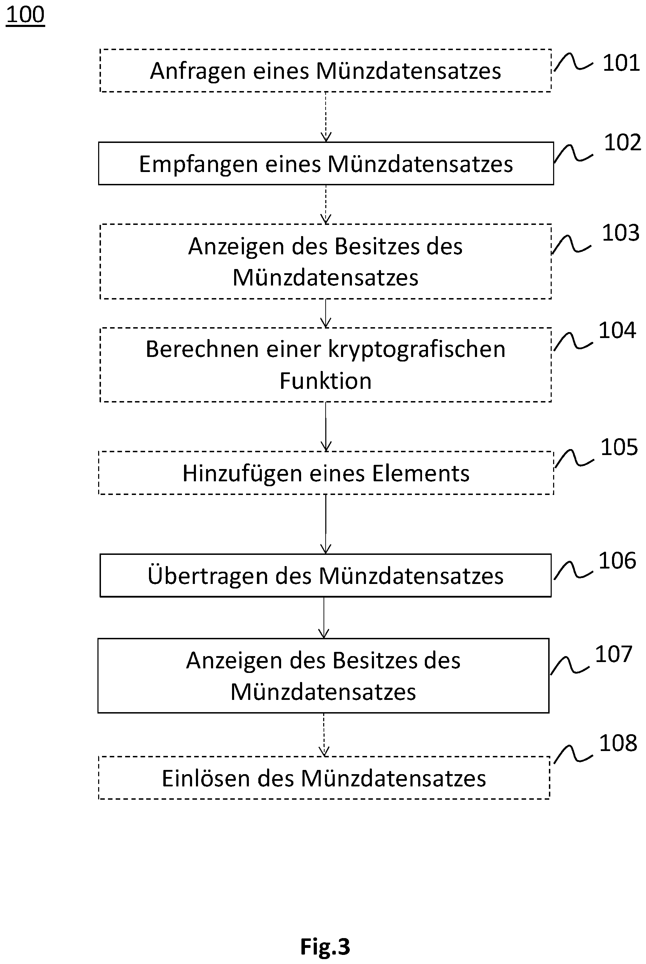

Die Fig.3 zeigt zudem ein Ausführungsbeispiel eines Verfahrensablaufdiagramms des erfindungsgemäßen Verfahrens 100. Nachfolgend werden die Fig.2 und Fig.3 in Kombination mit dem System gemäß Fig.1 erläutert.

In Fig.2 und Fig.3 ist mit dem Schritt 101 eine Anfrage zur Entnahme (Abbuchung) von Online-Münzdatensätzen einer Anzahl n aus der Transaktionsdatenbank 1 durch das erste Sicherheitselement 1 gezeigt. Die Online-Münzdatensätzen haben einen geldwerten Betrag (Münzwert) von $C_{max}$. Dazu sendet das erste Sicherheitselement SE1 ein Abbuchungs-Kommando im Schritt 101 an die Transaktionsdatenbank 1. Das Abbuchungs-Kommando wird beispielsweise mit einem privaten Schlüssel PrK des Endgeräts M1 bzw. des Sicherheitselements SE1 signiert. Die Transaktionsdatenbank 1 entscheidet in Blockchain-Technologie, ob dem Abbuchungskommando gefolgt werden kann, beispielsweise ob das Konto des Endgeräts 1 für den geldwerten Betrag $C_{max}$ ausreichend Deckung aufweist. Im Ja-Fall wird der geldwerte Betrag $C_{max}$ als Münzdatensatz vom Konto 5(M1) des Endgeräts M1 abgehoben.

Eine vertrauenswürdige Verifizier-Einheit 2 überwacht alle Aktionen der Transaktionsdatenbank 1 und sendet im Schritt 102 als Herausgeber einen digitalen elektronischen Münzdatensatz $C_{root}$ mit dem Maximalwert $C_{max}$ an das erste Sicherheitselement SE1 des Endgeräts M1.

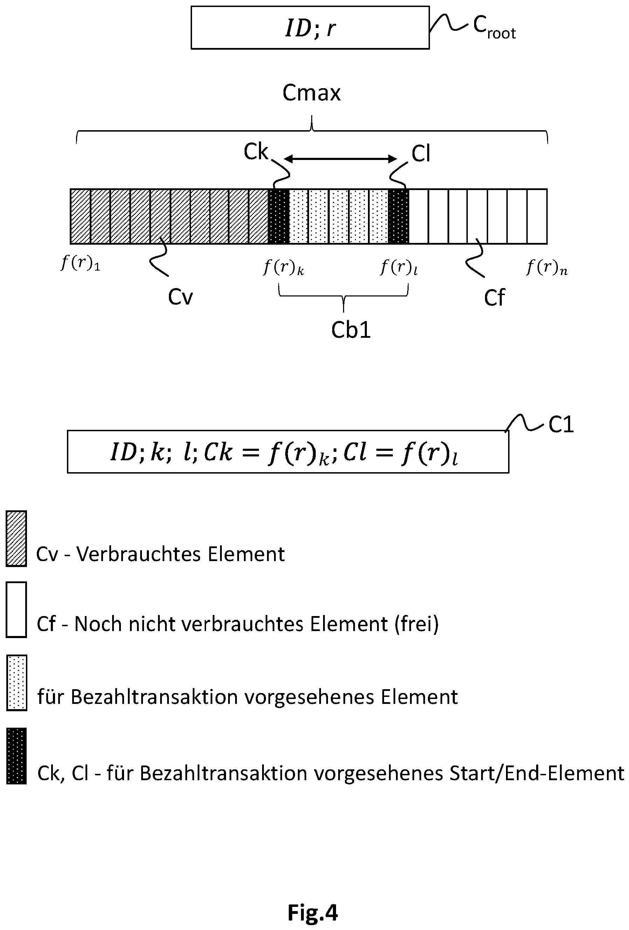

Zwischen dem Schritt 101 und 102 ist ein Münzdatensatz-Generieren Schritt vorgesehen, der entweder in der Transaktionsdatenbank 1 oder in der Verifizier-Einheit 2 durchgeführt wird. Zunächst wird eine Anzahl n von Elementen für den Münzdatensatz anhand des geldwerten Betrages $C_{max}$ festgelegt. Die Elemente sind für dieses Ausführungsbeispiel gleichwertig, können aber grundsätzlich auch unterschiedliche Gewichtung aufweisen. Zudem wird eine echte Zufallszahl r generiert, die den Münzdatensatz $C_{root}$ repräsentiert. Diese Zufallszahl r und eine Position x eines Elementes $C_x$ in dem Münzdatensatz $C_{root}$ sind die Eingangsparameter für eine kryptografische Funktion $f(r)_x$. Das Ergebnis der kryptografischen Funktion $f(r)_x$ repräsentiert das Element $C_x$ an der Position x. Beispielsweise ist n = 24, sodann können 24 Elemente $C_x$ mittels der Zufallszahl r und der jeweiligen Position x der 24 Elemente $C_x$ im Münzdatensatz $C_{root}$ errechnet werden. Für einen Beispiel-Münzdatensatz $C_{root}$ wird auf Fig.4 verwiesen.

Wird der Münzdatensatz $C_{root}$ in der Transaktionsdatenbank 1 erzeugt, wird vor dem Schritt 102 die Zufallszahl r an die Verifizier-Einheit 2 gesendet (gestrichelter Pfeil in Fig.2). Nach Erhalt des Münzdatensatzes $C_{root}$ im Sicher-heitselement SE1 wird dieser möglicherweise zu Registrierungszwecken im Schritt 103 (nicht in Fig.2 gezeigt) in der Verifizier-Einheit 2 angezeigt. Dabei kann auch ein Bestätigungs-Kommando ausgetauscht werden, welches ggf. eine Signatur der Verifizier-Einheit 2 beinhaltet.

Im Schritt 102 wird der Münzdatensatz $C_{root}$ an das erste Sicherheitselement 102 gesendet. Dabei kann auch ein Bestätigungs-Kommando ausgetauscht werden, welches ggf. eine Signatur der Verifizier-Einheit 2 beinhaltet. Der Münzdatensatz $C_{root}$ wird durch die Zufallszahl r repräsentiert und weist zudem eine Kennung ID auf, dazu mehr in Fig.4

Der Maximalwert $C_{max}$ wird in einem Speicherbereich des ersten Sicherheitselement SE1 sicher verwaltet, nachfolgend als Depot bezeichnet.

Das Endgerät M1 ist nun dazu konfiguriert, um im Maximalwert $C_{max}$ direkte Transaktionen mit anderen Endgeräten M2, M3 in der Direkttransaktionsschicht 3 durchzuführen.

Im einfachsten Fall wechselt der gesamte geldwerte Betrag $C_{max}$ des Münzdatensatzes $C_{root}$ zwischen dem ersten Sicherheitselement SE1 und dem zweiten Sicherheitselement SE2, indem der Münzdatensatz $C_{root}$ vollständig übertragen wird (nicht dargestellt in Fig.2 oder Fig.3). Dabei würde das zweite Sicherheitselement SE2 den Münzda-tensatz $C_{root}$ mit der Kennung ID und Zufallszahl r übertragen. Aufgrund der vertrauenswürdigen Sicherheitselemente SE1, SE2 wird der geldwerte Betrag $C_{max}$ so sicher übertragen. Das zweite Sicherheitselement SE2 kann dann im Schritt 107 diesen Münzdatensatz $C_{root}$ bei der Verifizier-Einheit 2 anzeigen und damit auf Echtheit prüfen und danach diesen Münzdatensatz $C_{root}$ zu weiteren Bezahlvorgängen mit anderen Sicherheitselementen SE1, SE3 austauschen.

Betrachtet wird nun ein anderer Anwendungsfall, in dem nicht der gesamte geldwerte Betrag $C_{max}$ an das

zweite Sicherheitselement SE2 übertragen werden soll, sondern nur ein Bruchteil davon. Im in Fig.4 dargestellten Fall wird der Münzdatensatz $C_{root}$ durch eine Zufallszahl r repräsentiert. Der Münzdatensatz $C_{root}$ repräsentiert dabei eine Anzahl n Elemente und er kann erfindungsgemäß aufgeteilt werden. So wird ein flexibleres Bezahlen ermöglicht.

Zum Bezahlen eines geldwerten Betrags $C_{b1}$ wird ein abgeleiteter Münzdatensatz $C_1$ erstellt. Dazu wird gemäß Schritt 105 zumindest ein Element $C_x$ des in Schritt 102 empfangenen Münzdatensatzes $C_{root}$ anhand der Position x dieses Elements $C_x$ und der Zufallszahl r mittels einer kryptografischen Funktion $f(r)_x$ errechnet und daraus ein abgeleiteter Münzdatensatz $C_1$ erzeugt. Dieser abgeleitete Münzdatensatz $C_1$ wird zum zweiten Sicherheitselement SE2 im Schritt 106 übertragen. In diesem Anwendungsfall wird die Zufallszahl r nicht an das zweite Sicherheitselement SE2 übertragen.

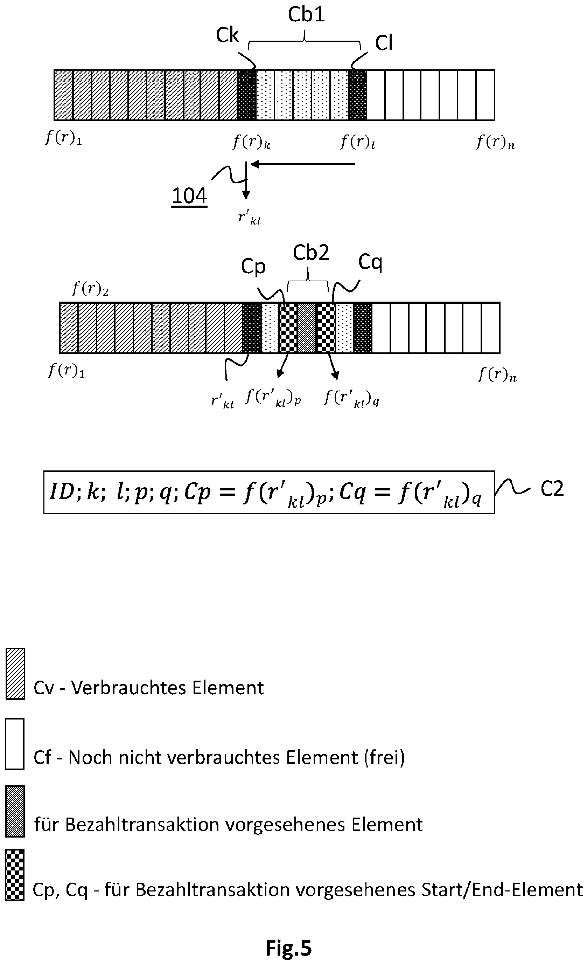

In Fig.2 wird im Schritt 106 nicht nur ein Element $C_x$ des Münzdatensatzes $C_{root}$ übertragen. Dementgegen wurde ein zu übertragender geldwerter Betrag $C_{b1}$ bestimmt, der durch eine Sequenz von Elementen $C_x$ des erhaltenen Münzdatensatzes $C_{root}$ repräsentiert wird. Das Teilen eines Münzdatensatzes $C_{root}$ zum Erhalten eines abgeleiteten Münzdatensatzes $C_1$ bestehend aus einer Sequenz ist in den Fig.4 und Fig.5 detailliert erläutert.

Der Schritt 106 kann als ein Bezahlen-Schritt angesehen werden. Im Endgerät M1 wird ein vom empfangenen Münzdatensatz $C_{root}$ abgeleiteter Münzdatensatz $C_1$ an das Endgerät M2 sendet. In dem Schritt 106 kann neben dem abgeleiteten Münzdatensatz $C_1$ auch noch eine Sendeadresse; eine Empfangsadresse; und/oder eine Signatur des Verifizier-Einheit 2 übertragen werden, um die Glaubwürdigkeit des Bezahlens zu erhöhen.

Das erste Sicherheitselement SE1 des Endgeräts M1 markiert im empfangenen Münzdatensatz $C_{root}$ den Wert $C_{b1}$ des abgeleiteten Münzdatensatz $C_1$ als "abgeleitet". Der Wert im Depot verringert sich entsprechend auf $C_{max}$ - $C_{b1}$.

Wenn das zweite Sicherheitselement SE2 im zweiten Endgerät M2 den abgeleiteten Münzdatensatz $C_1$ im Schritt 106 empfängt, erfolgt in der Verifizier-Einheit 2 eine Prüfung aus dem Münzdatensatzes $C_{root}$, insbesondere der der Verifizier-Einheit 2 bekannten Zufallszahl r und dem abgeleiteten Münzdatensatz $C_1$, ob der vorhandene Wert $C_{b1}$ überhaupt vom Münzdatensatz $C_{root}$ abgeleitet werden konnte, und somit echt und gültig ist. Zudem bestätigt das Sicherheitselement SE2 ggf. den Empfang an das erste Sicherheitselement SE1 und zeigt den abgeleiteten Münzdatensatz $C_1$ in der Verifizier-Einheit 2 im Schritt 107 an. Dabei kann auch ein Bestätigungs-Kommando ausgetauscht werden, welches ggf. eine Signatur des abgeleiteten Münzdatensatzes $C_1$ von der Verifizier-Einheit 2 beinhaltet.

Der Wert des abgeleiteten Münzdatensatzes $C_1$ wird im Depot des zweiten Sicherheitselements SE2 gutgeschrieben durch Addieren des Wertes $+C_{b1}$ zum bereits im Depot enthaltenen Betrag. Nun hat das zweite Sicherheitselement SE2 (zumindest) einen Münzdatensatz $C_1$ zur Verfügung, den es entweder bei der Transaktionsdatenbank 1 einlösen kann (nicht dargestellt in Fig.2) oder zur Bezahlung an ein weiteres Endgeräts M3 überträgt. Zum Bezahlen an das Endgerät M3 errechnet das Endgerät M2 (bzw. das Sicherheitselement SE2) einen zu zahlenden geldwerten Betrag $C_{b2}$. Der geldwerte Betrag $C_{b2}$ ist ggf. geringer als der im abgeleiteten Münzdatensatz vorhandene Maximalbetrag $C_{b1}$. Somit ist ein vom abgeleiteten Münzdatensatz $C_1$ weiter abgeleiteter Münzdatensatz $C_2$ zu erstellen. Der Betrag $C_{b2}$ wird hier aus einer weiteren Sequenz innerhalb der Sequenz von Elementen $C_{C1}$ des Münzdatensatzes $C_1$ gebildet.

Um einen weiteren Münzdatensatz $C_2$ abzuleiten wird ebenfalls eine kryptografische Funktion $f(r'_{kl})_x$ im Schritt 104 angewendet. Als Eingangsparameter wird ein abgeleiteter Wert $r'_{kl}$ aus der Sequenz des abgeleiteten Münzdatensatzes $C_1$ und die Position x des Elements in der Sequenz des abgeleiteten Münzdatensatzes $C_1$ verwendet. Der resultierende weiter abgeleitete Münzdatensatz $C_2$ beinhaltet das Ergebnis der kryptografischen Funktion $f(r'_{kl})_x$ und die Position x des Elementes im empfangenen Münzdatensatz $C_{root}$. In Schritt 106 wird der abgeleitete Münzdatensatz $C_2$ zum dritten Sicherheitselement SE3 übertragen. Das Teilen eines Münzdatensatzes $C_{root}$ zum Erhalten abgeleiteter Münzdatensätze $C_1$ und $C_2$ bestehend aus unterschiedlich langen Sequenzen ist in den Fig.4 und Fig.5 detailliert erläutert.

Der Schritt 106 zwischen dem zweiten Sicherheitselement SE2 und dem dritten Sicherheitselement SE3 kann ebenfalls als ein Bezahlen-Schritt angesehen werden. In diesem Schritt 106 sendet das Endgerät M2 den weiter abgeleiteten Münzdatensatz $C_2$ vom zuvor empfangenen abgeleiteten Münzdatensatzes $C_1$ an das Endgerät M3. Dieser Schritt 106 kann neben dem weiter abgeleiteten Münzdatensatz $C_2$ auch noch eine Sendeadresse; eine Empfangsadresse; und/oder eine Signatur des Verifizier-Einheit 2 umfassen, um die Glaubwürdigkeit des Bezahlens zu erhöhen.

Das Sicherheitselement SE2 des Endgeräts M2 markiert im abgeleiteten Münzdatensatz $C_1$ den geldwerten Betrag $C_{b2}$ als "abgeleitet". Der geldwerte Betrag des übrig gebliebenen abgeleiteten Münzdatensatzes $C_1$' verringert sich entsprechend auf $C_{b1}$ - $C_{b2}$.

Wenn das dritte Sicherheitselement SE3 im dritten Endgerät M3 den weiter abgeleiteten Münzdatensatz $C_2$ im Schritt 106 empfängt, erfolgt von der Verifizier-Einheit 2 eine Echtheits-Prüfung, in dem aus dem Münzdatensatze $C_1$, insbesondere durch den der Verifizier-Einheit 2 bekannte Zufallszahl und dem abgeleiteten Münzdatensatz $C_2$. Zudem bestätigt das dritte Sicherheitselement SE3 ggf. den Empfang an das zweite Sicherheitselement SE2 und zeigt den weiter abgeleiteten Münzdatensatz $C_2$ in der Verifizier-Einheit 2 im Schritt 107 an. Dabei kann auch ein Bestätigungs-Kommando ausgetauscht werden, welches ggf. eine Signatur des weiter abgeleiteten Münzdatensatzes $C_2$ von der Verifizier-Einheit 2 beinhaltet.

Der geldwerte Betrag $C_{b2}$ des weiter abgeleiteten Münzdatensatzes $C_2$ wird im Depot des dritten Sicherheitselements SE3 zum im Depot befindlichen Betrag addiert. Nun hat das dritte Sicherheitselement SE3 zumindest einen Münzdatensatz $C_2$ zur Verfügung, den es bei der Transaktionsdatenbank 1 im Schritt 108 einlösen kann. Dazu sendet das dritte Sicherheitselement SE3 ein Gutschreibe-Kommando an die Transaktionsdatenbank 1. Das Gutschreibe-Kommando gemäß Schritt 108 beinhaltet die Sendeadresse vom Endgerät M3, den geldwerten Betrag $C_{b2}$, der gutgeschrieben werden soll und den weiter abgeleiteten Münzdatensatz $C_2$. Der gutzuschreibende Betrag $C_{b2}$ wird aus dem Depot des dritten Sicherheitselements SE3 gelöscht.

Gemäß Transaktionsdatenbank 1 hat das erste Endgerät M1 einen um den geldwerten Betrag $C_{max}$ verringerten Betrag auf seinem Konto 5(M1), das dritte Endgerät M3 einen um den geldwerten Betrag $C_{b2}$ erhöhten Betrag auf seinem Konto 5(M3) und der Kontostand des Kontos 5(M2) des zweiten Endgeräts M2 in der Transaktionsdatenbank 1 ist unverändert, da das zweite Sicherheitselement SE2 die Differenz aus den Beträgen $C_{b1}$ und $C_{b2}$ noch nicht gutgeschrieben hat.

Die Transaktionsdatenbank 1 ist nicht im Wissen über den Verbleib der Differenz aus $C_{b1}$ und $C_{b2}$ im zweiten Endgerät M2, wodurch ein anonymes M2M-Bezahlsystem geschaffen ist.

In Fig.4 ist nun einen erfindungsgemäßer Münzdatensatz $C_{root}$ und ein abgeleiteter Münzdatensatz $C_1$ gemäß der Erfindung gezeigt. Dieser Münzdatensatz $C_{root}$ wurde zwischen Schritt 101 und Schritt 102 der Fig.2 und Fig.3 generiert und hat einen Maximalwert von $C_{max}$, der auf 24 Elemente $f(r)_1$ bis $f(r)_n$ gleichmäßig aufgeteilt ist. Die Anzahl n der Elemente die durch den Münzdatensatz $C_{root}$ repräsentiert wird, ist demnach 24, sodass ein Element $C_x$ einen Wert von $1/24 * C_{max}$ entspricht. Der Münzdatensatz $C_{root}$ wird nicht durch die Elemente $C_x$ repräsentiert sondern durch eine, im Bezahlsystem eindeutige Zufallszahl r. Der Münzdatensatz $C_{root}$ weist zudem eine eindeutige Kennung ID auf. Somit zeigt Fig.4 eine Art digitale Streifenkarte mit einer Sequenz aus 24 nebeneinander angeordneter Elemente $C_x$. Diese Elemente $C_x$ können mit einer kryptografischen Funktion $f(r)_1$ bis $f(r)_n$ errechnet werden.

Beispielsweise wird zum Errechnen der Elemente $C_x$ die echte Zufallszahl r mit der Position k des jeweiligen Elements gehasht, siehe Gleichung 1:

$$f(r)_k = hash\ (r;k) \qquad\qquad (1)$$

um die n=24 Elemente $C_1$ bis $C_n$ durch die kryptografische Funktion $f(r)_1$ bis $f(r)_n$ zu erhalten.

Alternativ könnte auch eine elliptische Kurvenberechnung durchgeführt werden, wobei G der Erzeugungspunkt der elliptischen Kurve ist, siehe Gleichungen 2 und 3:

$$F(r)_k = r^k*G;\ F(r)_{k+1} = r^{k+1}*G;\ r* r^k*G = r* F(r)_k \qquad\qquad (2)$$

$$f(r)_k = x_{F(r)k} \qquad\qquad (3)$$

um die n=24 Elemente $C_1$ bis $C_n$ durch die kryptografische Funktion $f(r)_1$ bis $f(r)_n$ zu erhalten.

Die Elemente $C_1$ bis $C_n$ sind nicht Teil des Münzdatensatzes $C_{root}$. Diese Elemente $C_1$ bis $C_n$ können nur unter Kenntnis der Zufallszahl r errechnet werden. Es gilt daher, wer im Besitz der Zufallszahl r ist, kann jedes einzelne Element des Münzdatensatzes $C_{root}$ errechnen.

In Fig.4 ist dargestellt, dass der Münzdatensatz $C_{root}$ bereits 10 verbrauchte Elemente $C_v$ aufweist, die in Anwendung des erfindungsgemäßen Verfahrens bereits an andere Sicherheitselemente SEx ausgegeben wurden.

Des Weiteren ist in Fig.4 eine Sequenz aus sieben aufeinanderfolgenden Elementen $C_k$ bis $C_1$ dargestellt. Dabei ist das Anfangselement $C_k = f(r)_k$ und das Endelement $C_1 = f(r)_l$ der Sequenz zur Verdeutlichung gesondert gekennzeichnet. Diese Sequenz entspricht einem geldwerten Betrag von $C_{b1}$ und ist für die Bezahlung des zweiten Endgeräts M2 gemäß Schritt 106 vorgesehen. Die übrigen Elemente $C = f(r)_{l+1}$ bis $f(r)_n$ sind im Verfahren noch nicht verwendet worden.

Zur Bezahlung im Schritt 106 der Fig.2 und Fig.3 ist ein abgeleiteter Münzdatensatz $C_1$ vorgesehen, der in Fig.4 als Datensatz $C_1$ ebenfalls ausgedrückt ist durch:

$$ID;k;l;\ C_k = f(r)_k\ ;\ C_l = f(r)_l \qquad\qquad (4)$$

Gemäß (4) ist $C_1$ vom $C_{root}$ abgeleitet, indem die eindeutige ID vom $C_{root}$ verwendet wird und die Sequenz aus sieben Elementen durch die Elemente $C_k$ und $C_l$ angegeben wird. Die Zufallszahl r wird nicht übertragen.

Vorteilhaft werden nun nicht die sieben Elemente selbst als Datensatz $C_1$ übertragen, sondern:

- die Position k des Anfangselements $C_k$ der Sequenz im empfangenen Münzdatensatz $C_{root}$,
- die Position I des Endelements $C_I$ der Sequenz im empfangenen Münzdatensatz $C_{root}$,
- das Anfangselement $C_k = f(r)_k$ der Sequenz und
- das Endelement $C_I = f(r)_I$ der Sequenz,

wodurch der Münzdatensatz $C_1$ wesentlich kompakter ausgestaltet ist und weniger Ressourcen zur Übertragung aufweist.

Alternativ (in Fig.4 nicht dargestellt) könnte auch nur die Position und des Anfangselements $C_k$ und der Anzahl der Elemente des Segments übertragen werden. Diese Variante ist insofern unsicherer, als das nur ein Element $C_k$ übertragen wird, dessen Echtheit in der Verifizier-Einheit 2 geprüft werden könnte, während die o.g. Alternative zwei Elemente $C_k$ und $C_I$ zum Verifizieren bereitstellt.

Der Münzdatensatz $C_1$ der Fig.4 wird im Schritt 106 an das zweite Sicherheitselement SE2 übertragen und dort im Schritt 107 der Verifizier-Einheit 2 angezeigt, um auf Echtheit überprüft zu werden. Das zweite Sicherheitselement SE2 kennt die Zufallszahl r nicht. Somit kann das zweite Sicherheitselement die freien Elemente $f(r)_1$ bis $f(r)_n$ nicht berechnen. Durch Anzeige des Münzdatensatzes $C_1$ in der Verifizier-Einheit 2 zeigt das zweite Sicherheitselement SE2 den legitimierten Besitz des Münzdatensatzes $C_1$ an. Die Verifizier-Einheit 2 ist in Kenntnis der Zufallszahl r und kann somit prüfen, ob die im abgeleiteten Münzdatensatz C1 enthaltenen Elemente $C_k$ und $C_I$ korrekt sind und teilt dies ggf. dem zweiten Sicherheitselement SE2 mit. Die Verifizier-Einheit 2 protokolliert das Anzeigen, sodass das erste Sicherheitselement SE1 diesen Münzdatensatz $C_1$ kein zweites Mal ausgeben kann. Die Verifizier-Einheit 2 würde in einem derartigen verbotenen Wiederholungsfall die Vergabe dieser Sequenz bemerken und das anzeigende Sicherheitselement SEx entsprechend warnen und die Echtheit nicht bestätigen.

In Fig.5 sind der Münzdatensatz $C_1$ und ein davon abgeleiteter Münzdatensatz $C_2$ gemäß der Erfindung gezeigt. Dazu wird das sich in der Verifizier-Einheit 2 ergebende Bild des Münzdatensatzes $C_{root}$ zur Verdeutlichung gezeigt. Der Münzdatensatz $C_1$ wird nach dem Anzeigen-Schritt 107 verwendet, um den weiteren Münzdatensatz $C_2$ abzuleiten. Dazu werden die Schritte 104 und 105 der Fig. 2 und Fig.3 angewendet. In Schritt 104 wird eine kryptografische Funktion für zumindest ein Element der Sequenz des abgeleiteten Münzdatensatzes $C_1$ unter Verwendung eines abgeleiteten Wertes $r'_{kl}$ aus der Sequenz $C_k = f(r)_k$ bis $C_I = f(r)_I$ und der Position des Elements in der Sequenz berechnet. Gemäß Fig.5 wird sowohl das Anfangselement $C_k = f(r)_k$ und das Endelement $C_I = f(r)_I$ der Sequenz des Münzdatensatzes $C_1$ verwendet, um daraus einen Wert $r'_{kl}$ abzuleiten, siehe Gleichungen 5 bis 7:

$$r'_{kl} = f(r)_k \ AND \ f(r)_l \qquad (5)$$

$$r'_{kl} = f(r)_k \ XOR \ f(r)_l \qquad (6)$$

$$r'_{kl} = hash(f(r)_k; f(r)_l) \qquad (7)$$

Gleichung 5 beschreibt die logische UND Verknüpfung von Anfangselement $C_k = f(r)_k$ und Endelement $C_I = f(r)_I$ der Sequenz, um den abgeleiteten Wert $r'_{kl}$ zu erhalten. Gleichung 6 beschreibt die logische XOR Verknüpfung von Anfangselement $C_k = f(r)_k$ und Endelement $C_I = f(r)_I$ der Sequenz, um den abgeleiteten Wert $r'_{kl}$ zu erhalten. Andere logische Verknüpfungen sind ebenfalls denkbar, beispielsweise eine NAND; XNOR; Verknüpfung. Ziel dieser Verknüpfungen ist es mit möglichst geringem Rechenaufwand einen im Verfahren eindeutigen abgeleiteten Wert $r'_{kl}$ zu erhalten.

Gleichung 7 beschreibt alternativ eine Streuwertfunktion aus Anfangselement $C_k = f(r)_k$ und Endelement $C_I = f(r)_I$ der Sequenz, um den abgeleiteten Wert $r'_{kl}$ zu erhalten. Der abgeleitete Wert $r'_{kl}$ wird der Verifizier-Einheit 2 bekannt gegeben, sodass derartig abgeleitete Münzdatensätze weiterhin verifiziert werden können.

Der abgeleitete Wert $r'_{kl}$ wird dann verwendet, um das Anfangselement $C_p = f(r'_{kl})_p$ und das Endelement $C_q = f(r'_{kl})_q$ des abgeleiteten Münzdatensatzes $C_2$ zu berechnen, beispielsweise gemäß Gleichung 8 oder 9:

$$f(r'_{kl})_p = hash(r'_{kl}; p) \qquad (8)$$

$$F(r'_{kl})_p = (r'_{kl})^p * G \qquad (9)$$

Der abgeleitete Wert $r'_{kl}$ ist ebenfalls wie die Zufallszahl r ein Geheimnis. Ist die Bildungsvorschrift zum Erhalten des abgeleiteten Werts $r'_{kl}$ in der Verifizier-Einheit 2 bekannt, so kann jeder weiter abgeleitete Münzdatensatz, z.B. $C_2$,

verifiziert werden. Alle Ableitungen (auch Aufteilungen) von dem empfangenen Münzdatensatz $C_{root}$ können demnach von der Verifizier-Einheit 2 nachvollzogen und verifiziert werden.

In Fig.5 ist gezeigt, dass der Münzdatensatz $C_2$ eine Sequenz des Münzdatensatzes $C_1$ ist und drei Elemente repräsentiert. Das Anfangselement $C_p = f(r'_{kl})_p$ und das Endelement $C_q = f(r'_{kl})_q$ des weiter abgeleiteten Münzdatensatzes $C_2$ ersetzen jeweils das Anfangselement $C_k = f(r)_k$ und das Endelement $C_l = f(r)_l$ des Münzdatensatzes $C_1$. Zudem sind die jeweiligen Positionen p und q gemäß empfangenem Münzdatensatz $C_{root}$ nun im weiter abgeleiteten Münzdatensatz $C_2$ enthalten, sodass der resultierende weiter abgeleitete Münzdatensatz $C_2$ lautet:

$$ID;k;l;p;q;\ C_p = f(r'_{kl})_p;\ C_q = f(r'_{kl})_q \tag{10}$$

Gemäß Gleichung (10) ist der Münzdatensatz $C_2$ vom Münzdatensatz $C_1$ und dem empfangenen Münzdatensatz $C_{root}$ abgeleitet, was durch die eindeutige ID vom $C_{root}$ angezeigt wird. Der im Schritt 106 zwischen dem zweiten Sicherheitselement SE2 und dem dritten Sicherheitselement SE3 ausgetauschten Münzdatensatz $C_2$ umfasst demnach:

- die eindeutige Kennung des erhaltenen Münzdatensatz $C_{root}$,
- die Position k des Anfangselements $C_k = f(r)_k$ der Sequenz des abgeleiteten Münzdatensatz $C_1$ im empfangenen Münzdatensatz $C_{root}$,
- die Position l des Endelements $C_l = f(r)_l$ der Sequenz des abgeleiteten Münzdatensatz $C_1$ im empfangenen Münzdatensatz $C_{root}$,
- die Position p des Anfangselements $C_p = f(r'_{kl})_p$ der Sequenz des abgeleiteten Münzdatensatz $C_2$ im empfangenen Münzdatensatz $C_{root}$,
- die Position q des Endelements $C_q = f(r'_{kl})_q$ der Sequenz des abgeleiteten Münzdatensatz $C_2$ im empfangenen Münzdatensatz $C_{root}$,
- das Anfangselement $C_p = f(r'_{kl})_p$ der Sequenz und
- das Endelement $C_q = f(r'_{kl})_q$ der Sequenz.

Die resultierende Sequenz entspricht dem geldwerten Betrag $C_{b2}$ und ist für die Bezahlung des dritten Endgeräts M3 gemäß Schritt 106 vorgesehen.

Alternativ (in Fig.4 nicht dargestellt) könnte auch nur die Position und des Anfangselements und der Anzahl der Elemente des Segments übertragen werden. Die o.g. Variante ist insofern sicherer, als das zwei Elemente übertragen werden, deren Echtheit in der Verifizier-Einheit 2 geprüft werden können, während die Alternative nur ein Element zum Verifizieren bereitstellt.

Dieser weiter abgeleitete Münzdatensatz $C_2$ kann bei der Transaktionsdatenbank 1 gemäß Schritt 108 eingelöst werden. Dazu errechnet die Transaktionsdatenbank 1 aus der Zufallszahl r, dem abgeleiteten Wert $r'_{kl}$, den Positionen k, l, p, q die Elemente $C_p = f(r'_{kl})_p$ und $C_q = f(r'_{kl})_q$ und verifiziert bei Übereinstimmung von $f(r'_{kl})_p$ $f(r'_{kl})_q$ die Echtheit des abgeleiteten Münzdatensatzes $C_2$.

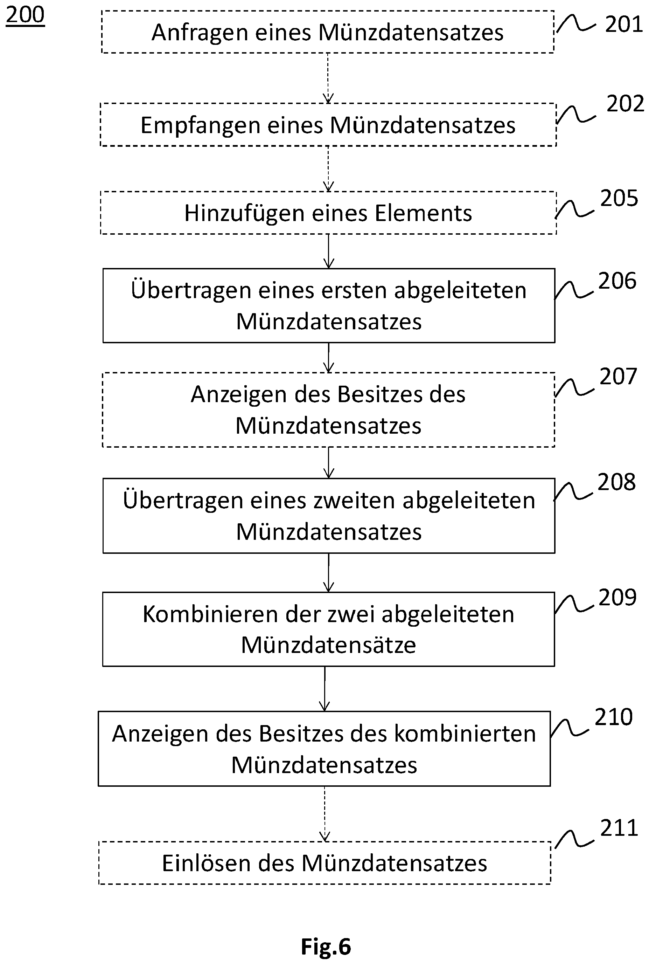

In Fig.6 ist ein weiteres Ausführungsbeispiel eines Verfahrensablaufs zum direkten Austausch von Münzdatensätzen zwischen drei Sicherheitselementen SE1, SE2, SE3 gemäß der Erfindung dargestellt. Dieses Verfahren befasst sich mit dem Kombinieren von abgeleiteten Münzdatensätzen. Dabei wird auf die oben beschriebenen Aussagen vollständig Bezug genommen. Somit ist ein erfindungsgemäßes Ableiten (Teilen) und Kombinieren (Zusammenführen) von Münzdatensätzen in flexiblem Maß möglich und durch die geschickte Übertragung von sehr kleinen Datensätzen ist ein schnelles Verfahren zum Austausch geldwerter Beträge in einem "Pay-per-Use" M2M Anwendungsgebiet geschaffen. Dieses Verfahren kann bei einer Vielzahl von automatisierten Bezahlverfahren, beispielsweise beim automatischen Bezahlen nach einem Tanken eines Kfz, angewendet werden.

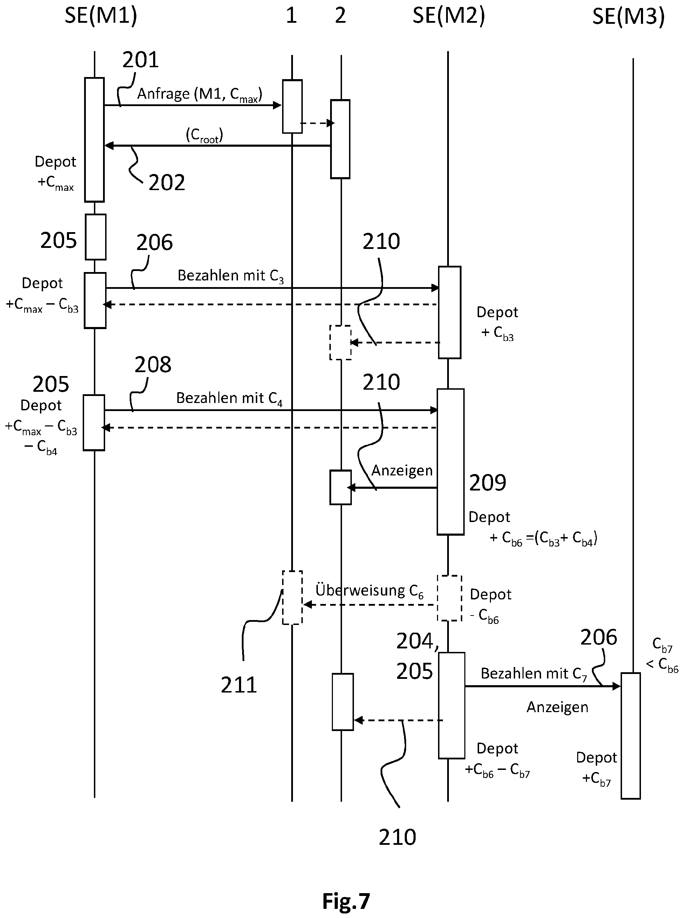

In Fig.7 ist zudem ein weiteres Ausführungsbeispiel eines Verfahrensablaufdiagramms eines erfindungsgemäßen Verfahrens 200 dargestellt. Die Fig.6 und Fig.7 werden im Folgenden gemeinsam betrachtet und die darin beschriebenen Verfahrensschritte können in einem System gemäß Fig.1 ausgeführt bzw. durchgeführt werden.

Die Schritte 201 und 202 entsprechen den Schritten 101 und 102 der Fig.2 und Fig.3 und werden nachfolgend nicht erneut beschrieben. Zwischen dem Schritt 201 und 202 ist ein Datensatz-Generieren Schritt vorgesehen, der entweder in der Transaktionsdatenbank 1 oder der Verifizier-Einheit 2 durchgeführt wird, so wie es in Bezug zu Fig.2 und Fig.3 bereits beschrieben wurde. Nach Erhalt des Münzdatensatzes $C_{root}$ im Sicherheitselement SE1 wird dieser möglicherweise zu Registrierungszwecken (nicht in Fig.6/7 gezeigt) in der Verifizier-Einheit 2 angezeigt. Dabei kann auch ein Bestätigungs-Kommando ausgetauscht werden, welches ggf. eine Signatur der Verifizier-Einheit 2 beinhaltet.

Der Maximalwert $C_{max}$ wird in einem Speicherbereich des ersten Sicherheitselement SE1 sicher verwaltet, nachfolgend als Depot bezeichnet. Das Endgerät M1 ist nun dazu konfiguriert, um im Maximalwert $C_{max}$ direkte Trans-

aktionen mit anderen Endgeräten M2, M3 in der Direkttransaktionsschicht 3 der Fig.1 durchzuführen.

Im in Fig.6 und Fig.7 dargestellten Fall repräsentiert der Münzdatensatz $C_{root}$ n-Elemente und kann erfindungsgemäß aufgeteilt werden. So wird ein flexibleres Bezahlen ermöglicht. Die Schritte 205 und 206 entsprechen dabei den Schritten 105 und 106 der Fig.2 und Fig.3.

Dazu errechnet das Endgerät M1 in einem ersten Bezahlvorgang einen zu zahlenden Betrag $C_{b3}$ und erstellt einen ersten abgeleiteten Münzdatensatz $C_3$. Dazu wird gemäß Schritt 205 zumindest ein Element $C_x$ des in Schritt 202 empfangenen Münzdatensatzes $C_{root}$ aus der Zufallszahl r und der Position x dieses Elements $C_x$ errechnet und daraus ein erster abgeleiteter Münzdatensatz $C_3$ erzeugt. Dieser erste abgeleitete Münzdatensatz $C_3$ wird zum zweiten Sicherheitselement SE2 im Schritt 206 übertragen.

In Fig.7 wird im Schritt 206 nicht nur ein Element $C_x$ des Münzdatensatzes $C_{root}$ übertragen. Dementgegen wurde ein zu übertragender geldwerter Betrag $C_{b3}$ bestimmt, der durch eine Sequenz von Elementen $C_x$ des erhaltenen Münzdatensatzes $C_{root}$ gebildet wird. Das Teilen eines Münzdatensatzes $C_{root}$ zum Erhalten eines abgeleiteten Münzdatensatzes $C_3$ ist in den Fig.4 und Fig.5 bereits detailliert erläutert worden und wird hier nicht wiederholt. Das Ableiten des ersten Münzdatensatzes $C_3$ erfolgt beispielsweise analog zum Ableiten des Münzdatensatzes $C_1$ gemäß Fig.4.

Das Sicherheitselement SE1 des Endgeräts M1 markiert im empfangenen Münzdatensatz $C_{root}$ den Wert $C_{b3}$ des abgeleiteten Münzdatensatz $C_3$ als "abgeleitet". Der Wert des übrig gebliebenen Münzdatensatzes verringert sich entsprechend auf $C_{max} - C_{b3}$.

Wenn das zweite Sicherheitselement SE2 im zweiten Endgerät M2 den ersten abgeleiteten Münzdatensatz $C_3$ im Schritt 106 empfängt, erfolgt in der Verifizier-Einheit 2 eine Prüfung aus dem Münzdatensatzes $C_{root}$, insbesondere aus der der Verifizier-Einheit 2 bekannten Zufallszahl r und dem abgeleiteten Münzdatensatz $C_{max}$. Zudem bestätigt das Sicherheitselement SE2 ggf. den Empfang an das erste Sicherheitselement SE1 und zeigt den abgeleiteten Münzdatensatz $C_3$ in der Verifizier-Einheit 2 im Schritt 210 an. Dabei kann auch ein Bestätigungs-Kommando ausgetauscht werden, welches ggf. eine Signatur des abgeleiteten Münzdatensatzes $C_3$ von der Verifizier-Einheit 2 beinhaltet.

Der Wert des abgeleiteten Münzdatensatzes $C_3$ wird im Depot des zweiten Sicherheitselements SE2 gutgeschrieben durch Addieren des Wertes $+C_{b3}$ zum bereits im Depot enthaltenen Betrag. Nun hat das zweite Sicherheitselement SE2 (zumindest) einen Münzdatensatz $C_3$ zur Verfügung, den es entweder bei der Transaktionsdatenbank 1 einlösen kann (nicht dargestellt in Fig.2) oder zur Bezahlung eines weiteren Endgeräts M3 verwendet (ebenfalls nicht dargestellt in Fig.2).

In Fig.7 wird gemäß Schritt 208 nun ein weiterer Bezahlvorgang zwischen dem ersten Endgerät M1 und dem zweiten Endgerät M2 durchgeführt. Der Schritt 208 gleicht technisch dem Schritt 206 und es wird auf weiteres Ausführen verzichtet. Die Depots der Sicherheitselemente SE1, SE2 ändern sich entsprechend, die Echtheitsprüfungen und das Anzeigen an der Verifizier-Einheit 2 werden optional, vorzugsweise an zu einem Zeitpunkt, zu der eine bestimmte Anzahl an Münzdatensätze $C_3$, $C_4$,... vorhanden sind, durchgeführt. Die zeitliche Abfolge der zwei Bezahl-Schritte 206, 208 die Zeitpunkte und auch die Übertragung der geldwerten Beträge $C_{b3}$ $C_{b4}$ ist dabei nicht erfindungswesentlich. Selbstverständlich ist dieses Verfahren nicht auf zwei Bezahlvorgänge beschränkt. Vielmehr können drei oder mehrere Bezahlvorgänge vorgenommen werden.

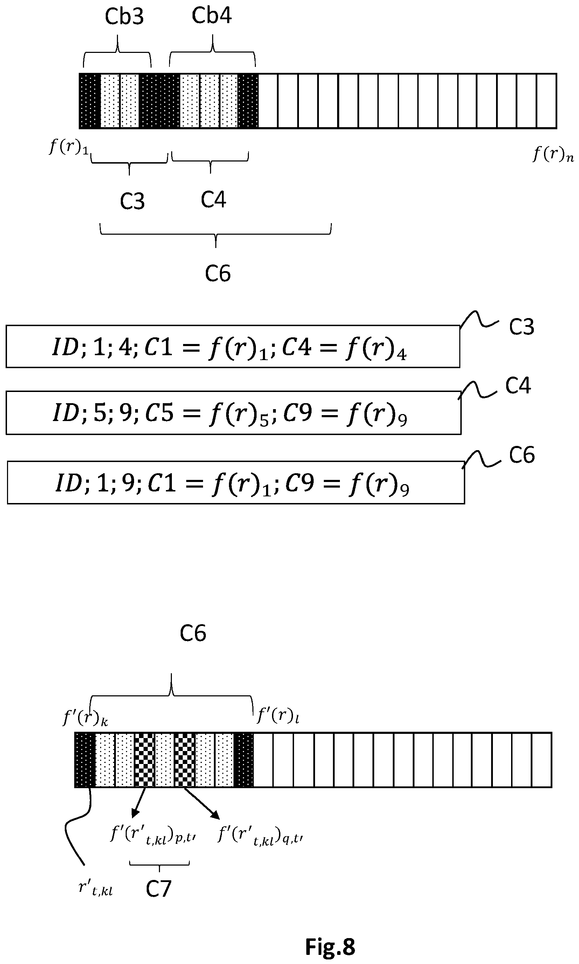

Im Ergebnis der Übertragen-Schritte 206, 208 der Fig.7 werden im zweiten Endgerät M2 zwei abgeleitete Münzdatensätze $C_3$, $C_4$ erhalten. Alle abgeleiteten Münzdatensätze $C_3$, $C_4$ sind vom empfangenen Münzdatensatz $C_{root}$ direkt abgeleitet (Ebene 1). In Fig.8 ist dies verdeutlicht.

Im Schritt 209 wird nun geprüft, ob die abgeleiteten Münzdatensätze $C_3$, $C_4$ miteinander kombiniert werden können. Dazu ist sicherzustellen, dass die Kennung ID jedes Münzdatensatzes $C_3$, $C_4$ identisch ist, wodurch eine Ableitung vom empfangenen Münzdatensatz $C_{root}$ angezeigt wird. Zudem kann geprüft werden, ob die Elemente der Münzdatensätze $C_3$, $C_4$ direkt aufeinander folgen und ob Lücken zwischen den Elementen der Münzdatensätze $C_3$, $C_4$ in Bezug auf den empfangenen Münzdatensatz $C_{root}$ vorhanden sind. Dazu können ableitungsabhängige Zählwerte t, t' in den Datensätzen $C_3$, $C_4$ verwendet werden. Das Vorhandensein von Lücken wird geprüft, um zu verhindern, dass nicht erhaltene Münzdatensätze dennoch eingelöst werden können. Theoretisch könnte auf derartige Lückenkontrollen verzichtet werden, wenn alle Elemente gleichwertig sind und die Anzahl der Elemente der Münzdatensätze $C_3$, $C_4$ sicher übertragen wird. Dennoch erhöht das Prüfen auf Lücken die Sicherheit am System.

Ergibt diese Prüfung, dass alle Elemente der Münzdatensätze $C_3$, $C_4$ (ggf. lückenlos) vom empfangenen Münzdatensatz $C_{root}$ abgeleitet sind, können diese Münzdatensätze $C_3$, $C_4$ miteinander kombiniert werden, was im Schritt 209 auch erfolgt. Im Ergebnis des Kombinierens wird ein kombinierter abgeleiteter Datensatz $C_6$ erhalten. Der kombinierte abgeleitete Münzdatensatz $C_6$ hat einen geldwerten Betrag, welcher der Summe aller einzelnen Münzdatensätze $C_3$, $C_4$ entspricht. Der kombinierte abgeleitete Münzdatensatz $C_6$ wird im Schritt 210 der Verifizier-Einheit 2 angezeigt, die unabhängig vom Sicherheitselement SE2 die Prüfung der Kombinierbarkeit prüft und so die Echtheit verifiziert.

In Fig.7 gestrichelt dargestellt, kann der geldwerte Betrag $C_6$ vom zweiten Sicherheitselement SE2 bei der Transaktionsdatenbank 1 im Schritt 211 eingelöst werden. Dazu sendet das zweite Sicherheitselement SE2 ein Gutschreibe-Kommando an die Transaktionsdatenbank 1. Das Gutschreibe-Kommando gemäß Schritt 211 beinhaltet die Sendeadresse vom Endgerät M2, den gutzuschreibenden geldwerten Betrag $C_{b6}$ und den kombinierten abgeleiteten

Münzdatensatz $C_6$. Der gutzuschreibende Betrag $C_{b6}$ wird aus dem Depot des zweiten Sicherheitselements SE2 gelöscht. Gemäß der Transaktionsdatenbank 1 hat das erste Endgerät M1 einen um den geldwerten Betrag $C_{max}$ verringerten Betrag auf seinem Konto 5(M1), das zweite Endgerät M2 einen um den geldwerten Betrag $C_{b6}$ erhöhten Betrag auf seinem Konto 5(M2) und der Kontostand auf dem Konto 5 (M3) des dritten Endgeräts M3 in der Transaktionsdatenbank 1 ist unverändert. Die Transaktionsdatenbank 1 ist nicht im Wissen über den Verbleib der Differenz aus $C_{b6}$ und $C_{max}$, wodurch ein anonymes M2M- Bezahlsystem geschaffen ist.

Alternativ zum Einlösen im Schritt 211 kann das zweite Endgerät M2 den kombinierten geldwerten Betrag $C_{b6}$ auch zum Bezahlen in der Direkttransaktionsschicht 3 weiterverwenden. Zum Bezahlen an das Endgerät M3 errechnet das Endgerät M2 (bzw. das Sicherheitselement SE2) einen zu zahlenden geldwerten Betrag $C_{b7}$. Der geldwerte Betrag $C_{b7}$ ist geringer als der im kombinierten abgeleiteten Münzdatensatz $C_6$ vorhandene geldwerte Betrag $C_{b6}$. Somit kann erneut ein vom abgeleiteten Münzdatensatz $C_6$ weiter abgeleiteter Münzdatensatz $C_7$ erstellt werden. Der Betrag $C_{b7}$ wird hier aus einer weiteren Sequenz innerhalb der Sequenz von Elementen des Münzdatensatzes $C_6$ gebildet.

Dieses weitere Ableiten erfolgt grundsätzlich wie die in Fig.2 und Fig.3 beschriebenen Maßnahmen. Dazu wird eine kryptografische Funktion $f(r'_{kl})_x$ im Schritt 204 angewendet. Als Eingangsparameter wird zumindest ein Element der Sequenz unter Verwendung eines abgeleiteten Wertes $r'_{kl}$ aus der Sequenz und der Position x des Elements in der Sequenz des abgeleiteten Münzdatensatzes $C_1$ errechnet. Um ein flexibles Kombinieren von Münzdatensätzen aus unterschiedlichen Ebenen zu ermöglichen ist bevorzugt der abgeleiteter Wert $r'_{kl}$ auch von einem münzdatensatzspezifischen Übertragungszählwert t, t' abhängig und es wird ein abgeleiteter Wert $r'_{t,kl}$ verwendet werden. Der weiter abgeleitete Münzdatensatz $C_7$ hat das Ergebnis der kryptografischen Funktion $C_x = f(r'_{kl})_x$ oder im Fall eines Übertragungszählwert t, t' abhängigen abgeleiteten Wertes das Ergebnis der kryptografischen Funktion $C'_x = f'(r'_{kl,t})_x$ für ein Element an der Position x im empfangenen Münzdatensatz $C_{root}$. In Schritt 206 wird der weiter abgeleitete Münzdatensatz $C_7$ zum dritten Sicherheitselement SE3 übertragen.

Im Schritt 206 wird neben dem weiter abgeleitete Münzdatensatz $C_7$ auch noch eine Sendeadresse; eine Empfangsadresse; und/oder eine Signatur des Verifizier-Einheit 2 übertragen, um die Glaubwürdigkeit zu erhöhen.

Das Sicherheitselement SE2 des Endgeräts M2 markiert im empfangenen Münzdatensatz $C_6$ den geldwerten Betrag $C_{b7}$ des weiter abgeleiteten Münzdatensatz $C_7$ als "abgeleitet". Der geldwerte Betrag des übrig gebliebenen abgeleiteten Münzdatensatzes $C_6'$ verringert sich entsprechend auf $C_{b6} - C_{b7}$.

Wenn das dritte Sicherheitselement SE3 im dritten Endgerät M3 den weiter abgeleiteten Münzdatensatz $C_7$ im Schritt 206 empfängt, erfolgt ggf. wieder eine Plausibilitäts-Prüfung, siehe Prüfung $C_{b7} < C_{b6}$? Zudem bestätigt das dritte Sicherheitselement SE3 ggf. den Empfang an das zweite Sicherheitselement SE2 und zeigt den weiter abgeleiteten Münzdatensatz $C_7$ in der Verifizier-Einheit 2 an. Dabei kann auch ein Bestätigungs-Kommando ausgetauscht werden, welches ggf. eine Signatur des weiter abgeleiteten Münzdatensatzes $C_7$ der Verifizier-Einheit 2 beinhaltet.

In Fig.8 ist nun ein erfindungsgemäßes Zusammenführen von den Münzdatensätzen $C_3$, $C_4$ beschrieben. Dabei werden die geldwerten Beträge $C_{b3}$, $C_{b4}$ von Münzdatensätzen $C_3$, $C_4$ zu unterschiedlichen Zeiten in einem der Sicherheitselemente SEx erhalten. Es ist mitunter denkbar, dass keiner der einzeln erhaltene geldwerte Beträge $C_{b3}$, $C_{b4}$ ausreicht, um eine ausstehende Forderung an einer der Endgeräte M1, M2 zu begleichen, allerdings die Kombination davon. In einem derartigen Fall könnten zwar die Münzdatensätze $C_3$, $C_4$ einzeln übertragen werden, allerdings erhöht das den Sende- und Empfangsaufwand und erhöht auch die Anforderungen an die Verifizier-Einheit 2 und das dazu benötigte Anzeigen der Münzdatensätze $C_3$, $C_4$. In jedem Fall sollten kombinierbare Datensätze kombiniert werden, um die Datenmenge beim Austausch der Münzdatensätze auf ein Minimum zu reduzieren.

Voraussetzung für das Kombinieren ist es, dass die Münzdatensätze $C_3$, $C_4$ von einem empfangenen Münzdatensatz $C_{root}$ stammen und die gleiche ID aufweisen. Dies lässt sich über die eindeutige Kennung ID prüfen. Stimmt diese überein, so wurden die Münzdatensätze $C_3$, $C_4$ von einem Münzdatensatz $C_{root}$ abgeleitet.

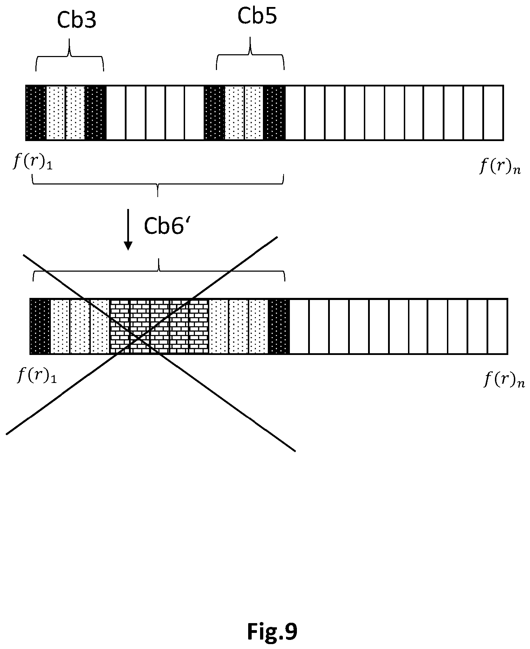

In Fig.9 ist ein Manipulationsversuch beim Kombinieren dargestellt. Im Unterschied zur Fig.8, wurden nur die geldwerten Beträge $C_{b3}$ und $C_{b5}$ empfangen, der geldwerte Betrag $C_{b4}$ wurde aber nicht im Sicherheitselement SEx empfangen. Auch hier könnte ein Kombinieren der Münzdatensätze $C_3$ und $C_5$ gemäß Schritt 209 erfolgen, da die Kennung ID gleich ist es könnte versucht werden, den geldwerten Betrag $C_{b6}$ resultierend aus der Addition der Beträge $C_{b3} + C_{b4} + C_{b5}$ für alle dreizehn Elemente bei der Transaktionsdatenbank 1 einzulösen. Um dies zu verhindern werden bevorzugt Übertragungszählwerte t, t' eingesetzt, die sowohl im Sicherheitselement SEx als auch in der Verifizier-Einheit 2 geprüft werden können, wie nachfolgend beschrieben wird.

Zunächst wird der Münzdatensatz $C_{root}$ wie in Fig.4 beschrieben generiert und ausgegeben, siehe Gleichung (1).

In dem Sicherheitselement SEx oder der Verifizier-Einheit 2 wird nun beim Ableiten des Münzdatensatzes $C_1$ ein ableitungsspezifischer Übertragungszählwert t eingesetzt. Mit jeder neuen Ableitungsebene wird ein weiterer Zählwert generiert und von Eins gestartet. Ein weiter abgeleiteter Münzdatensatz $C_7$ hat demnach einen ersten Zählwert t (erste Ebene) und einen zweiten Zählwert t' (zweite Ebene). Das Ableiten erster Ebene in abhängig des ableitungsspezifischen Übertragungszählwert t wird nun am Beispiel des Münzdatensatzes $C_3$ erläutert. Der vom erhaltenen Münzdatensatz $C_{root}$ abgeleitete Münzdatensatz $C_3$ hat die Elemente $C_1 = f(r)_1$ bis $C_4 = f(r)_4$. Jedes dieser Elemente $C_1 = f(r)_1$ bis $C_4 = f(r)_4$ und der Übertragungszählwert t (beim erstmaligen Ableiten hat t den Wert 1) werden nun mit einer kryptografischen Funktion erneut berechnet, beispielsweise, gemäß Gleichung 11:

$$f'(r)_k = hash \, (f(r)_k;t) \qquad (11)$$

Rückblickend auf Fig. 8, können die Elemente dann wieder aneinandergereiht werden und ergeben sodann den geldwerten Betrag $C_{b6}$ aus der Addition der einzelnen geldwerten Beträge $C_{b3}$, $C_{b4}$ wie nachfolgend dargestellt wird.
Der Münzdatensatz $C_3$ mit dem geldwerten Betrag $C_{b3}$ wird beispielsweise durch (11) nun als (12) ausgedrückt, wobei der Übertragungszählwert t =1 ist:

$$ID;1;4; \, C_1 = f'(r)_1; \, C_4 = f'(r)_4 \qquad (12)$$

Der Münzdatensatz $C_4$ mit dem geldwerten Betrag $C_{b4}$ wird beispielsweise durch (11) nun als (13) ausgedrückt, wobei der Übertragungszählwert t=2 ist:

$$ID;5;9; \, C_5 = f'(r)_5; \, C9 = f'(r)_9 \qquad (13)$$

Der Münzdatensatz $C_5$ mit dem geldwerten Betrag $C_{b5}$ wird beispielsweise durch (11) nun (gemäß Fig. 9) als (14) ausgedrückt, wobei der Übertragungszählwert t =3 ist:

$$ID;10;13; \, C_{10} = f'(r)_{10}; \, C_{13} = f'(r)_{13} \qquad (14)$$

Der daraus resultierende Münzdatensatz zum Wert $C_{b6}$ würde eigentlich lauten:

$$ID;1;4;5;9; \, f'(r)_1;f'(r)_4; \, f'(r)_5;f'(r)_9; \qquad (15)$$

Der resultierende Münzdatensatz zum Wert Cb6' gemäß Figur 9 wäre:

$$ID;1;4;9;13; \, f'(r)_1;f'(r)_4; \, f'(r)_9;f'(r)_{13}; \qquad (15')$$

Aufgrund der gleichen ID in allen abgeleiteten Münzdatensätzen $C_3$, $C_5$ und der aufsteigenden Zählwerte t=1 bis 3 (Zählwert wird pro Ableitung um eins erhöht) können nun alle Zwischenwerte entfernt werden. Der kombinierte abgeleitete Münzdatensatz $C_6$ mit dem geldwerten Betrag $C_{b6}$ lautet gemäß (15):

$$ID;1; \, 9; \, C_{10} = f'(r)_1; \, C_{13} = f'(r)_9 \qquad (16)$$

Im Vergleich zwischen Gleichung (15) und (16) ist zu erkennen, dass die Länge des zu übertragenden Münzdatensatzes mittels des Reduzieren-Schritts deutlich gekürzt werden kann. Dieser Münzdatensatz $C_6$ kann nun gemäß Fig.2 bis 5 wieder geteilt werden oder eingelöst werden.
In Bezug auf die Gleichungen (11) bis (16) gilt anzumerken, dass die Kombination prinzipiell auch ohne den ableitungsspezifischen Übertragungszählwert t angewendet werden kann, sodann würde die Gleichung (11) einfach entfallen und die Gleichungen (12) bis (16) würden mit $C_x = f(r)_x$ anstelle $C'_x = f'(r)_x$ operieren.
In Fig.8 unten ist gezeigt, dass der Münzdatensatz $C_6$ nun wieder geteilt werden kann und der weiter abgeleitete Münzdatensatz $C_7$ von ihm abgeleitet wird, was über einen abgeleiteten Wert $r'_{kl}$ gemäß Fig.5 und der zusätzlichen Abhängigkeit vom Zählwert t erfolgt, also einem abgeleiteten Wert $r'_{t,kl}$. Dazu werden die Schritte 104 und 105 der Fig. 2 und Fig.3 angewendet, die den Schritten 204 und 205 entsprechen. In Schritt 204 wird eine kryptografische Funktion für zumindest ein Element der Sequenz unter Verwendung des abgeleiteten Wertes $r'_{t,kl}$ aus der Sequenz $C'_k = f'(r)_k$ bis $C'_l = f'(r)_l$ und der Position des Elements in der Sequenz berechnet. Gemäß Fig.8 (in Anlehnung an Fig.5) wurde sowohl das Anfangselement $C'_k = f'(r)_k$ als auch das Endelement $C'_l = f'(r)_l$ der Sequenz des Münzdatensatzes $C_6$ verwendet, um daraus einen abgeleiteten Wert $r'_{t,kl}$ abzuleiten, siehe Gleichungen (17) bis (19). In Anlehnung an Gleichungen (5) bis (7) erhält man für den abgeleiteten Wert $r'_{t,kl}$:

$$r'_{t,kl} = f'(r)_k \, AND \, f'(r)_l \qquad (17)$$

$$r'_{t,kl} = f'(r)_k \, XOR \, f'(r)_l \qquad (18)$$

$$r'_{kl} = hash(f'(r)_k; f'(r)_l) \qquad (19)$$

Der abgeleitete Wert $r'_{t,kl}$ wird dann verwendet, um das Anfangselement $C'_{p,t} = f'(r'_{t,kl})_{p,t'}$ und das Endelement $C'_{q,t} = f'(r'_{t,kl})_{q,t'}$ des abgeleiteten Münzdatensatzes $C_7$ in Abhängigkeit des Übertragungszählwertes t' (zweite Ebene) zu berechnen, beispielsweise gemäß Gleichung 20 oder 21:

$$f'(r'_{t,kl})_{p,t'} = hash(r'_{t,kl}; t'; p) \qquad (20)$$

$$F'(r'_{t,kl})_{t',p} = (r'_{t,kl})^{nt'+p} * G \qquad (21)$$

Der Übertragungszählwertes t' wird dabei in Abhängigkeit der Ebenen der Ableitung verwendet und ist somit ableitungsspezifisch. Die übrigen Schritte der Fig.5 wiederholen sich auch für eine Ableitung gemäß Fig.8.
Durch den Übertragungszählwert t' wird protokolliert, ob die Elemente eines jeden abgeleiteten Münzdatensatzes zusammenhängen oder nicht, sodass der Manipulationsversuch gemäß Fig.9 entdeckt wird und unterbunden werden kann. Mittels des ableitungsspezifischen Zählwertes t, t' können auch Münzdatensätze unterschiedlicher Ableitungsebenen sicher kombiniert werden.
Dieses Verfahren der Fig.6 bis 9 kann beispielsweise beim automatisierten Tanken angewendet werden, wobei beispielsweise in einem festen Takt (bspw. jede Sekunde oder Millisekunde) ein Element eines Münzdatensatzes von einem Sicherheitselement SEx eines Kfz (MEx) an ein Sicherheitselement SEy einer Tankstelle (MEy) übertragen wird. Nach Beendigung des Tankvorgangs eines Kfz werden alle übertragenen Elemente dieses Münzdatensatzes kombiniert und ein wesentlich kleinerer resultierender Münzdatensatz zur Einlösung auf dem Geldkonto 5 der Tankstelle übertragen.
Im Rahmen der Erfindung können alle beschriebenen und/oder gezeichneten und/oder beanspruchten Elemente beliebig miteinander kombiniert werden.

BEZUGSZEICHENLISTE

| | |
|---|---|
| 1 | Transaktionsdatenbank |
| 2 | Verifizier-Einheit |
| 3 | Direkttransaktions schicht |
| 4 | Komponenten-Schicht |
| 5 | Endgeräte-Konto |
| ID | Eindeutige Kennung des Münzdatensatzes |
| M1 | erstes Endgerät |
| M2 | zweites Endgerät |
| M3 | drittes Endgerät |
| MxUx | Endgeräte-Komponente |
| SE1 | erstes Sicherheitselement |
| SE2 | zweites Sicherheitselement |
| SE3 | drittes Sicherheitselement |
| $C_1$ | abgeleiteter Münzdatensatz |
| $C_2$ | weiter abgeleiteter Münzdatensatz |
| $C_3$ | erster abgeleiteter Münzdatensatz |
| $C_4$ | zweiter abgeleiteter Münzdatensatz |
| $C_5$ | dritter abgeleiteter Münzdatensatz |
| $C_6$ | weiter abgeleiteter Münzdatensatz von einem kombinierten Münzdatensatz |
| $C_{max}$ | Maximalwert des Münzdatensatzes |
| $C_x$ | einzelnes Element des Münzdatensatzes $C_{root}$ an der Position x |

| | |
|---|---|
| $C_{C1}$ | einzelnes Element des Münzdatensatzes $C_1$ an der Position x |
| $C_v$ | einzelnes verbrauchtes Element |
| $C_f$ | einzelnes nicht verbrauchtes Element |
| $C_b, C_{bx}$ | geldwerte Beträge, repräsentiert durch Sequenz aufeinanderfolgender Elemente $C_x$ |
| n | Anzahl aller Elemente eines Münz-Datensatzes (=Maximalwert des Münz-Datensatzes) |
| r | Zufallszahl |
| t, t' | Zählwert |
| $f(r)_x$ | Elementabhängige Funktion über die Zufallszahl des Elements Cx |
| 101-109 | Verfahrensschritte gemäß einem Ausführungsbeispiel |
| 201-211 | Verfahrensschritte gemäß einem weiteren Ausführungsbeispiel |

**Patentansprüche**

1. Ein Verfahren (200) zum direkten Austauschen von elektronischen Münzdatensätzen zwischen Sicherheitselementen (SE1, SE2, SE3) von Endgeräten (M1, M2; M3), mit den Schritten:

   - Empfangen (202) eines Münzdatensatzes ($C_{root}$) in einem ersten Sicherheitselement (SE1), wobei der Münzdatensatz ($C_{root}$) durch eine Zufallszahl (r) repräsentiert ist und eine Anzahl (n) von Elementen ($C_x$) des empfangenen Münzdatensatzes ($C_{root}$) berechnet werden kann,, wobei jedes Element ($C_x$) des empfangenen Münzdatensatzes ($C_{root}$) als Ergebnis einer kryptografischen Funktion ($f(r)_x$) aus der Zufallszahl (r) und der jeweiligen Position (x) des Elements ($C_x$) im Münzdatensatz ($C_{root}$) abbildbar ist;
   - Berechnen, im ersten Sicherheitselement (SE1), zumindest eines Elements ($C_k$) des empfangenen Münzdatensatzes ($C_{root}$) aus der Zufallszahl (r) und der Position (k) des Elements ($C_k$) im Münzdatensatz ($C_{root}$) mittels der kryptografischen Funktion ($f(r)_k$),
   - Übertragen (206) eines ersten vom empfangenen Münzdatensatz ($C_{root}$) abgeleiteten Münzdatensatzes ($C_3$) vom ersten Sicherheitselement (SE1) an ein zweites Sicherheitselement (SE2), wobei der abgeleitete Münzdatensatz ($C_3$) zumindest das berechnete Element ($C_k$) des empfangenen Münzdatensatzes ($C_{root}$) und die Position des berechneten Elementes (k) im empfangenen Münzdatensatz ($C_{root}$) aufweist;
   - Berechnen, im ersten Sicherheitselement (SE1), zumindest eines dem berechneten Element ($C_k$) des ersten abgeleiteten Münzdatensatzes ($C_3$) direkt folgendes weiteres Element des empfangenen Münzdatensatzes ($C_{root}$) aus der Zufallszahl (r) und der Position des direkt folgenden weiteren Elements im Münzdatensatz ($C_{root}$) mittels der kryptografischen Funktion (f(r)),
   - Übertragen (208) eines zweiten vom empfangenen Münzdatensatz ($C_{root}$) abgeleiteten Münzdatensatzes ($C_4$) an das zweite Sicherheitselement (SE2), wobei der zweite abgeleitete Münzdatensatz ($C_4$) zumindest das berechnete direkt folgende weitere Element des empfangenen Münzdatensatzes ($C_{root}$) und die Position des berechneten direkt folgenden weiteren Elementes im empfangenen Münzdatensatz ($C_{root}$) aufweist;
   - Kombinieren (209) des ersten abgeleiteten Münzdatensatzes ($C_3$) mit dem zweiten abgeleiteten Münzdatensatz ($C_4$) zum Erhalten eines kombinierten abgeleiteten Münzdatensatz ($C_6$); und
   - Anzeigen (210) des Besitzes des kombinierten abgeleiteten Münzdatensatzes ($C_6$) vom zweiten Sicherheitselement (SE2) an einer Verifizier-Einheit (2), woraufhin das zumindest eine Element ($C_x$) erst einlösbar (108) ist.

2. Das Verfahren (200) nach Anspruch 1, wobei der erste abgeleitete Münzdatensatz ($C_3$); und/oder der zweite abgeleitete Münzdatensatz ($C_4$) an der Verifizier-Einheit (2) angezeigt werden und/ oder auf Echtheit geprüft werden, woraufhin das zumindest eine Element ($C_x$) erst einlösbar (108) ist.

3. Das Verfahren (200) nach einem der vorhergehenden Ansprüche, wobei mit dem ersten abgeleiteten Münzdatensatz ($C_3$) und/oder mit dem zweiten abgeleiteten Münzdatensatz ($C_4$) zwei Elemente des empfangenen Münzdatensatzes ($C_{root}$) an das zweite Sicherheitselement (SE2) übertragen werden, wobei die zwei Elemente eine Sequenz von Elementen des empfangenen Münzdatensatzes ($C_{root}$) repräsentiert.

4. Das Verfahren (200) nach Anspruch 3, wobei der erste abgeleitete Münzdatensatz ($C_3$) und/oder der zweite abgeleitete Münzdatensatz ($C_4$) jeweils nur ein Anfangselement der Sequenz; ein Endelement der Sequenz; und deren jeweilige Positionen im empfangenen Münzdatensatz ($C_{root}$) aufweist.

5. Das Verfahren (200) nach einem der vorhergehenden Ansprüche, wobei jedes Element ($C_x$) des empfangenen Münzdatensatzes ($C_{root}$) als das Ergebnis einer kryptografischen Funktion ($f(r)_x$, $f(r)_x$) aus der Zufallszahl (r), der Position (x) des Elements ($C_x$) im Münzdatensatz ($C_{root}$) und einem münzdatensatzspezifischen Übertragungszähl-

wert (t, t') abbildbar ist.

6. Das Verfahren (200) nach Anspruch 5, wobei vor dem Kombinieren-Schritt (209) geprüft wird, ob der münzdatensatzspezifische Übertragungszählwert (t') vom zweiten abgeleiteten Münzdatensatz ($C_4$) vom münzdatensatzspezifische Übertragungszählwert (t, t') des ersten abgeleiteten Münzdatensatz ($C_3$) um mehr als einen Zählwert abweicht.

7. Das Verfahren (200) nach einem der Ansprüche 3 bis 6, wobei das Verfahren (200) weiter umfasst:

   - Berechnen (204) einer kryptografischen Funktion ($f(r'_{kl})_p$, $f(r'_{k1,t})_{p,t'}$) für zumindest ein Element der Sequenz des ersten oder des zweiten abgeleiteten Münzdatensatzes ($C_3$, $C_4$) unter Verwendung eines abgeleiteten Wertes ($r'_{kl}$, $r'_{k1,t}$) aus der Sequenz des ersten oder zweiten abgeleiteten Münzdatensatzes ($C_3$, $C_4$) und der Position des Elements in der Sequenz;
   - Hinzufügen (205) des Ergebnisses der kryptografischen Funktion ($f(r'_{kl})_p$, $f(r'_{kl,t})_{p,t'}$) und der Position des Elementes im empfangenen Münzdatensatz ($C_{root}$) zum kombinierten abgeleiteten Münzdatensatz ($C_6$).

8. Das Verfahren (200) nach Anspruch 7, wobei der abgeleitete Wert ($r'_{kl}$, $r'_{kl,t}$) eine logische Verknüpfung des Anfangselements der Sequenz des ersten abgeleiteten Münzdatensatzes ($C_1$) mit dem Endelement der Sequenz des zweiten abgeleiteten Münzdatensatzes ($C_4$) ist.

9. Das Verfahren (200) nach Anspruch 7 oder 8, wobei der abgeleitete Wert ($r'_{k1}$, $r'_{kl,t}$) eine Streuwertfunktion aus Anfangselement der Sequenz des ersten abgeleiteten Münzdatensatzes ($C_3$) und Endelement der Sequenz des zweiten abgeleiteten Münzdatensatzes ($C_4$) und einem abgeleiteten münzdatensatzspezifischen Übertragungszählwert (t, t') der Sequenz ist.

10. Das Verfahren (200) nach einem der vorhergehenden Ansprüche, wobei die kryptografische Funktion ($f(r'_{kl})_p$, $f(r'_{kl,t})_{p,t'}$) eine Streuwertfunktion oder eine Funktion elliptischer Kurven ist.

11. Das Verfahren (200) nach einem der vorhergehenden Ansprüche, wobei die Verifizier-Einheit (2) in Kenntnis der Zufallszahl (r) und des Übertragungszählwert (t, t') ist.

12. Das Verfahren (200) nach einem der vorhergehenden Ansprüche, wobei der zweite abgeleitete Münzdatensatz ($C_4$) vom ersten Sicherheitselement (SE1) übertragen wird.

13. Das Verfahren (200) nach einem der vorhergehenden Ansprüche, wobei jedes Sicherheitselement (SE1, SE2, SE3) einem Endgerät (M1, M2, M3) eindeutig zugeordnet ist und dieses Sicherheitselement (SE1, SE2, SE3) bevorzugt auch zumindest einer Komponente (MxUx) des Endgeräts (M1, M2, M3) zugeordnet ist.

14. Das Verfahren (200) nach einem der vorhergehenden Ansprüche, wobei ein übertragener abgeleiteter Münzdatensatz im empfangenen Münzdatensatz ($C_{root}$) vom ersten Sicherheitselement (SE1) als verbraucht ($C_v$) markiert wird.

15. Ein Bezahlsystem zum Austausch von geldwerten Beträgen zwischen zumindest zwei Endgeräten (M1, M2, M3), wobei jedes der Endgeräte (M1, M2, M3) ein Sicherheitselement (SE1, SE2, SE3) aufweist, wobei das Bezalsystem umfasst:

   - eine dezentral geführte Transaktionsdatenbank (1) zum Übertragen (106) von geldwerten Beträgen zwischen den Endgeräten (M1, M2, M3);
   - eine Verifikationseinheit (2) zum Verifizieren von digitalen Münzdatensätzen ($C_{root}$, $C_1$ - $C_7$); und
   - eine Direkttransaktionsschicht (3), in welcher das Verfahren (100) nach einem der vorhergehenden Ansprüche 1 bis 14 durchgeführt wird.

**Claims**

1. A method (200) for directly exchanging electronic coin data sets between security elements (SE1, SE2, SE3) of terminals (M1, M2; M3), comprising the steps of:

   - receiving (202) a coin data set ($C_{root}$) in a first security element (SE1), wherein the coin data set ($C_{root}$) is

represented by a random number (r) and a number (n) of elements ($C_x$) of the received coin data set ($C_{root}$) can be calculated, wherein each element ($C_x$) of the received coin data set ($C_{root}$) can be mapped as a result of a cryptographic function ($f(r)_x$) from the random number (r) and the respective position (x) of the element ($C_x$) in the coin data set ($C_{root}$);

- calculating, in the first security element (SE1), at least one element ($C_k$) of the received coin data set ($C_{root}$) from the random number (r) and the position (k) of the element ($C_k$) in the coin data set ($C_{root}$) by means of the cryptographic function ($f(r)_k$),

- transmitting (206) a first coin data record ($C_3$) derived from the received coin data record ($C_{root}$) from the first security element (SE1) to a second security element (SE2), wherein the derived coin data record ($C_3$) comprises at least the calculated element ($C_k$) of the received coin data record ($C_{root}$) and the position of the calculated element (k) in the received coin data record ($C_{root}$);

- calculating, in the first security element (SE1), at least one further element of the received coin data set ($C_{root}$) directly following the calculated element ($C_k$) of the first derived coin data set ($C_3$) from the random number (r) and the position of the directly following further element in the coin data set ($C_{root}$) by means of the cryptographic function (f(r)),

- transmitting (208) a second coin data set ($C_4$) derived from the received coin data set ($C_{root}$) to the second security element (SE2), the second derived coin data set ($C_4$) comprising at least the calculated directly following further element of the received coin data set ($C_{root}$) and the position of the calculated directly following further element in the received coin data set ($C_{root}$);

- combining (209) the first derived coin data set ($C_3$) with the second derived coin data set ($C_4$) to obtain a combined derived coin data set ($C_6$); and

- indicating (210) possession of the combined derived coin data set ($C_6$) from the second security element (SE2) to a verification unit (2), whereupon the at least one element ($C_x$) is only redeemable (108).

2. The method (200) according to claim 1, wherein the first derived coin data set ($C_3$); and/or the second derived coin data set ($C_4$) are displayed and/or checked for authenticity at the verifying unit (2), whereupon the at least one element ($C_x$) is only redeemable (108).

3. The method (200) according to any one of the preceding claims, wherein with the first derived coin data set ($C_3$) and/or with the second derived coin data set ($C_4$) two elements of the received coin data set ($C_{root}$) are transmitted to the second security element (SE2), wherein the two elements represent a sequence of elements of the received coin data set ($C_{root}$).

4. The method (200) according to claim 3, wherein the first derived coin data set ($C_3$) and/or the second derived coin data set ($C_4$) each comprises only an initial element of the sequence; an end element of the sequence; and their respective positions in the received coin data set ($C_{root}$).

5. The method (200) according to any one of the preceding claims, wherein each element ($C_x$) of the received coin data set ($C_{root}$) can be mapped as the result of a cryptographic function ($f(r)_x$, $f'(r)_x$) from the random number (r), the position (x) of the element ($C_x$) in the coin data set ($C_{root}$) and a coin data set-specific transmission count value (t, t').

6. The method (200) according to claim 5, wherein prior to the combining step (209) it is checked whether the coin data set-specific transfer count value (t') from the second derived coin data set ($C_4$) differs from the coin data set-specific transfer count value (t, t') of the first derived coin data set ($C_3$) by more than one count value.

7. The method (200) according to any one of claims 3 to 6, wherein the method (200) further comprises:

- calculating (204) a cryptographic function ($f(r'_{kl})_p$, $f(r'_{kl,t})_{p,t'}$) for at least one element of the sequence of the first or second derived coin data set ($C_3$, $C_4$) using a derived value ($r'_{k1}$, $r'_{k1,t}$) from the sequence of the first or second derived coin data set ($C_3$, $C_4$) and the position of the element in the sequence;

- adding (205) the result of the cryptographic function ($f(r'_{kl})_p$, $f(r'_{k1,t})_{p,t'}$) and the position of the element in the received coin data set ($C_{root}$) to the combined derived coin data set ($C_6$).

8. The method (200) according to claim 7, wherein the derived value ($r'_{k1}$, $r'_{k1,t}$) is a logical operation of the initial element of the sequence of the first derived coin data set ($C_1$) with the final element of the sequence of the second derived coin data set ($C_4$).

9. The method (200) according to claim 7 or 8, wherein the derived value ($r'_{k1}$, $r'_{k1,t}$) is a scatter function of initial element of the sequence of the first derived coin data set ($C_3$) and end element of the sequence of the second derived coin data set ($C_4$) and a derived coin data set specific transmission count value (t, t') of the sequence.

10. The method (200) according to any one of the preceding claims, wherein the cryptographic function ($f(r'_{kl})_p$, $f(r'_{k1,t})_{p,t'}$) is a scattering value function or an elliptic curve function.

11. The method (200) according to any one of the preceding claims, wherein the verifying unit (2) has knowledge about the random number (r) and the transmission count (t, t').

12. The method (200) according to any one of the preceding claims, wherein the second derived coin data set ($C_4$) is transmitted from the first security element (SE1).

13. The method (200) according to any one of the preceding claims, wherein each security element (SE1, SE2, SE3) is uniquely associated with a terminal device (M1, M2, M3) and this security element (SE1, SE2, SE3) is preferably also associated with at least one component (MxUx) of the terminal device (M1, M2, M3).

14. The method (200) according to any one of the preceding claims, wherein a transmitted derived coin record in the received coin record ($C_{root}$) is marked as consumed ($C_v$) by the first security element (SE1).

15. A payment system for exchanging monetary amounts between at least two terminals (M1, M2, M3), each of the terminals (M1, M2, M3) having a security element (SE1, SE2, SE3), the payment system comprising:

- a decentrally managed transaction database (1) for transferring (106) monetary amounts between the terminals (M1, M2, M3);
- a verification unit (2) for verifying digital coin records ($C_{root}$, $C_1$ - $C_7$); and
- a direct transaction layer (3) in which the method (100) according to any of the preceding claims 1 to 14 is performed.

## Revendications

1. Procédé (200) d'échange direct d'ensembles de données monétaires électroniques entre des éléments de sécurité (SE1, SE2, SE3) à partir de terminaux (M1, M2, M3), comportant les étapes consistant à :

- recevoir (202) un ensemble de données monétaires ($C_{root}$) dans un premier élément de sécurité (SE1), dans lequel l'ensemble de données monétaires ($C_{root}$) est représenté par un nombre aléatoire (r) et un nombre (n) d'éléments (Cx) de l'ensemble de données monétaires reçu ($C_{root}$) peut être calculé, dans lequel chaque élément ($C_x$) de l'ensemble de données monétaires reçu ($C_{root}$) peut être restitué sous forme de résultat d'une fonction cryptographique ($f(r)_x$) du nombre aléatoire (r) et de la position respective (x) de l'élément ($C_x$) dans l'ensemble de données monétaires ($C_{root}$) ;
- calculer, dans le premier élément de sécurité (SE1), au moins un élément ($C_k$) de l'ensemble de données monétaires reçu ($C_{root}$) à partir du nombre aléatoire (r) et de la position (k) de l'élément ($C_k$) dans l'ensemble de données monétaires ($C_{root}$) au moyen de la fonction cryptographique ($f(r)_k$),
- transmettre (206) à partir du premier élément de sécurité (SE1) à un deuxième élément de sécurité (SE2), un premier ensemble de données monétaires ($C_3$) déduit de l'ensemble de données monétaires reçu ($C_{root}$), dans lequel l'ensemble de données monétaires déduit ($C_3$) comporte au moins l'élément calculé ($C_k$) de l'ensemble de données monétaires reçu ($C_{root}$) et la position de l'élément calculé (k) dans l'ensemble de données monétaires reçu ($C_{root}$) ;
- calculer, dans le premier élément de sécurité (SE1), au moins un élément supplémentaire de l'ensemble de données monétaires reçu ($C_{root}$) suivant immédiatement l'élément calculé ($C_k$) du premier ensemble de données monétaires déduit ($C_{root}$), à partir du nombre aléatoire (r) et de la position (k) de l'élément supplémentaire ($C_k$) immédiatement suivant dans l'ensemble de données monétaires ($C_{root}$) au moyen de la fonction cryptographique ($f(r)_k$),
- transmettre (208) au deuxième élément de sécurité (SE2) un second ensemble de données monétaires ($C_4$) déduit de l'ensemble de données monétaires reçu ($C_{root}$), dans lequel le second ensemble de données monétaires déduit ($C_4$) comporte au moins l'élément supplémentaire calculé immédiatement suivant de l'ensemble de données monétaires reçu ($C_{root}$) et la position de l'élément supplémentaire calculé immédiatement suivant dans l'ensemble de données monétaires reçu ($C_{root}$) ;

- combiner (209) le premier ensemble de données monétaires déduit ($C_3$) avec le second ensemble de données monétaires déduit ($C_4$) pour obtenir un ensemble de données monétaires déduit combiné ($C_6$) ; et
- afficher (210) la détention de l'ensemble de données monétaires déduit combiné ($C_6$) par le deuxième élément de données (SE2) sur une unité de vérification (2), après quoi le au moins un élément ($C_x$) est alors recouvrable (108).

2. Procédé (200) selon la revendication 1, dans lequel le premier ensemble de données monétaires déduit ($C_3$) et/ou le second ensemble de données monétaires déduit ($C_4$) sont affichés sur l'unité de vérification (2) et/ou sont contrôlés en temps réel, après quoi le au moins un élément ($C_x$) est alors recouvrable (108).

3. Procédé (200) selon l'une des revendications précédentes, dans lequel deux éléments de l'ensemble de données monétaires reçu ($C_{root}$) sont transmis au deuxième élément de sécurité (SE2) avec le premier ensemble de données monétaires déduit ($C_3$) et/ou avec le second ensemble de données monétaires déduit ($C_4$), dans lequel les deux éléments représentent une séquence d'éléments de l'ensemble de données monétaires reçu ($C_{root}$).

4. Procédé (200) selon la revendication 3, dans lequel le premier ensemble de données monétaires déduit ($C_3$) et/ou le second ensemble de données monétaires déduit ($C_4$) ne comportent chacun uniquement qu'un élément de début de la séquence ; un élément de fin de la séquence ; et leurs positions respectives dans l'ensemble de données monétaires reçu ($C_{root}$).

5. Procédé (200) selon l'une des revendications précédentes, dans lequel chaque élément ($C_x$) de l'ensemble de données monétaires reçu ($C_{root}$) peut être restitué sous la forme du résultat d'une fonction cryptographique ($f(r)_x$, $f(r)_x$) du nombre aléatoire ($r$), de la position ($x$) de l'élément ($C_x$) dans l'ensemble de données monétaires ($C_{root}$) et d'une valeur de comptage de transmission ($t$, $t'$) spécifique à un ensemble de données monétaires.

6. Procédé (200) selon la revendication 5, dans lequel avant l'étape de combinaison (209), il est vérifié si la valeur de comptage de transmission ($t'$) spécifique à un ensemble de données monétaires du second ensemble de données monétaires déduit ($C_4$) s'écarte de la valeur de comptage de transmission ($t$, $t'$) spécifique à un ensemble de données monétaires du premier ensemble de données monétaires déduit ($C_3$) de plus d'une valeur de comptage.

7. Procédé (200) selon l'une des revendications 3 à 6, dans lequel le procédé (200) comprend en outre les étapes consistant à :

   - calculer (204) une fonction cryptographique ($f(r'_{kl})_p$, $f(r'_{kl,t})_{p,t'}$) pour au moins un élément de la séquence du premier ou du second ensemble de données monétaires déduit ($C_3$, $C_4$) en utilisant une valeur déduite ($r'_{kl}$, $r'_{kl,t}$) de la séquence du premier ou second ensemble de données monétaires déduit ($C_3$, $C_4$) et de la position de l'élément dans la séquence;
   - ajouter (205) le résultat de la fonction cryptographique ($f(r'_{kl})_p$, $f(r'_{kl,t})_{p,t'}$) et de la position de l'élément dans l'ensemble de données monétaires reçu ($C_{root}$) à l'ensemble de données monétaires déduit combiné ($C_6$).

8. Procédé (200) selon la revendication 7, dans lequel la valeur déduite ($r'_{kl}$, $r'_{kl,t}$) est une combinaison logique de l'élément de début de la séquence du premier ensemble de données monétaires déduit ($C_1$) avec l'élément de fin de la séquence du second ensemble de données monétaires déduit ($C_4$).

9. Procédé (200) selon la revendication 7 ou 8, dans lequel la valeur déduite ($r'_{kl}$, $r'_{kl,t}$) est une fonction de hachage de l'élément de début de la séquence du premier ensemble de données monétaires déduit ($C_3$) et de l'élément de fin de la séquence du second ensemble de données monétaires déduit ($C_4$) et d'une valeur de comptage de transmission déduite ($t$, $t'$) de la séquence, spécifique à un ensemble de données monétaires.

10. Procédé (200) selon l'une des revendications précédentes, dans lequel la fonction cryptographique ($f(r'_{kl})_p$, $f(r'_{kl,t})_{p,t'}$) est une fonction de hachage ou une fonction de courbes elliptiques.

11. Procédé (200) selon l'une des revendications précédentes, dans lequel l'unité de vérification (2) a connaissance du nombre aléatoire ($r$) et de la valeur de comptage de transmission ($t$, $t'$).

12. Procédé (200) selon l'une des revendications précédentes, dans lequel le second ensemble de données monétaires déduit ($C_4$) est transmis par le premier élément de sécurité (SE1).

**13.** Procédé (200) selon l'une des revendications précédentes, dans lequel chaque élément de sécurité (SE1, SE2, SE3) est associé à un terminal (M1, M2, M3) de manière unique et cet élément de sécurité (SE1, SE2, SE3) est de préférence également associé à au moins un composant (MxUx) du terminal (M1, M2, M3).

**14.** Procédé (200) selon l'une des revendications précédentes, dans lequel un ensemble de données monétaires déduit transmis dans l'ensemble de données monétaires reçu ($C_{root}$) par le premier élément de sécurité (SE1) est marqué comme étant dépensé ($C_v$).

**15.** Système de paiement pour l'échange de sommes pécuniaires entre au moins deux terminaux (M1, M2, M3), dans lequel chacun des terminaux (M1, M2, M3) comporte un élément de sécurité (SE1, SE2, SE3), dans lequel le système de paiement comprend :

- une base de données transactionnelles décentralisée (1) pour transmettre (106) des sommes pécuniaires entre les terminaux (M1, M2, M3) ;
- une unité de vérification (2) pour vérifier des ensembles de données monétaires numériques ($C_{root}$, $C_1$ - $C_7$) ; et
- une couche de transaction directe (3), dans laquelle le procédé (100) selon l'une des revendications 1 à 14 est mis en œuvre.

**Fig.1**

**Fig.2**

100

| Anfragen eines Münzdatensatzes | 101 |

↓

| Empfangen eines Münzdatensatzes | 102 |

↓

| Anzeigen des Besitzes des Münzdatensatzes | 103 |

↓

| Berechnen einer kryptografischen Funktion | 104 |

↓

| Hinzufügen eines Elements | 105 |

↓

| Übertragen des Münzdatensatzes | 106 |

↓

| Anzeigen des Besitzes des Münzdatensatzes | 107 |

↓

| Einlösen des Münzdatensatzes | 108 |

**Fig.3**

$ID; r$ $C_{root}$

Cmax

Ck Cl

$f(r)_1$ $f(r)_k$ $f(r)_l$ $f(r)_n$

Cv Cf

Cb1

$$ID; k; l; Ck = f(r)_k; Cl = f(r)_l \quad C1$$

Cv - Verbrauchtes Element

Cf - Noch nicht verbrauchtes Element (frei)

für Bezahltransaktion vorgesehenes Element

Ck, Cl - für Bezahltransaktion vorgesehenes Start/End-Element

**Fig.4**

Cb1

Ck $\overbrace{\qquad}$ Cl

$f(r)_1$ $\qquad$ $f(r)_k$ $\qquad$ $f(r)_l$ $\qquad$ $f(r)_n$

<u>104</u>

$r'_{kl}$

Cb2

Cp $\overbrace{\qquad}$ Cq

$f(r)_2$

$f(r)_1$ $\qquad$ $f(r)_n$

$r'_{kl}$ $\quad f(r'_{kl})_p$ $\quad f(r'_{kl})_q$

$$ID; k;\ l; p; q; Cp = f(r'_{kl})_p; Cq = f(r'_{kl})_q$$ C2

Cv - Verbrauchtes Element

Cf - Noch nicht verbrauchtes Element (frei)

für Bezahltransaktion vorgesehenes Element

Cp, Cq - für Bezahltransaktion vorgesehenes Start/End-Element

**Fig.5**

200

Anfragen eines Münzdatensatzes 201

Empfangen eines Münzdatensatzes 202

Hinzufügen eines Elements 205

Übertragen eines ersten abgeleiteten Münzdatensatzes 206

Anzeigen des Besitzes des Münzdatensatzes 207

Übertragen eines zweiten abgeleiteten Münzdatensatzes 208

Kombinieren der zwei abgeleiteten Münzdatensätze 209

Anzeigen des Besitzes des kombinierten Münzdatensatzes 210

Einlösen des Münzdatensatzes 211

**Fig.6**

**Fig.7**

Cb3    Cb4

$f(r)_1$    $f(r)_n$

C3    C4

C6

$$ID; 1; 4; C1 = f(r)_1; C4 = f(r)_4$$    C3

$$ID; 5; 9; C5 = f(r)_5; C9 = f(r)_9$$    C4

$$ID; 1; 9; C1 = f(r)_1; C9 = f(r)_9$$    C6

C6

$f'(r)_k$    $f'(r)_l$

$f'(r'_{t,kl})_{p,t'}$    $f'(r'_{t,kl})_{q,t'}$

$r'_{t,kl}$    C7

**Fig.8**

**Fig.9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005008610 A1
- DE 102009038645 A1
- DE 102009034436 A1

- WO 2018126077 A1
- US 20180288095 A1
- US 20170132621 A1